(19) Europäisches Patentamt
European Patent Office
Office européen des brevets

(11) **EP 4 408 007 A1**

(12) **EUROPEAN PATENT APPLICATION**

(43) Date of publication:
**31.07.2024 Bulletin 2024/31**

(21) Application number: **24150316.8**

(22) Date of filing: **04.01.2024**

(51) International Patent Classification (IPC):
**H04N 23/67** (2023.01)    **H04N 23/60** (2023.01)
**G06T 7/00** (2017.01)    **G06V 10/82** (2022.01)

(52) Cooperative Patent Classification (CPC):
**H04N 23/67; G06T 7/00; G06V 10/82; H04N 23/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.01.2023 JP 2023008567**

(71) Applicant: **HAMAMATSU PHOTONICS K. K.**
**Hamamatsu-shi,**
**Shizuoka 435-8558 (JP)**

(72) Inventors:
• **TAKESHIMA, Tomochika**
**Hamamatsu-shi, Shizuoka 435-8558 (JP)**
• **ITO, Akari**
**Hamamatsu-shi, Shizuoka 435-8558 (JP)**
• **HIGUCHI, Takafumi**
**Hamamatsu-shi, Shizuoka 435-8558 (JP)**
• **HASHIMOTO, Yoshinori**
**Hamamatsu-shi, Shizuoka 435-8558 (JP)**

(74) Representative: **Hoffmann Eitle**
**Patent- und Rechtsanwälte PartmbB**
**Arabellastraße 30**
**81925 München (DE)**

(54) **FOCAL POSITION ESTIMATION METHOD, FOCAL POSITION ESTIMATION PROGRAM, FOCAL POSITION ESTIMATION SYSTEM, MODEL GENERATION METHOD, MODEL GENERATION PROGRAM, MODEL GENERATION SYSTEM, AND FOCAL POSITION ESTIMATION MODEL**

(57)    A focal position estimation method is a method of estimating a focal position when in focus corresponding to an estimation target image, and includes: an estimation target image acquisition step for acquiring an estimation target image; and a focal position estimation step for estimating a focal position when in focus corresponding to the estimation target image and according to a position in the estimation target image, from the estimation target image acquired in the estimation target image acquisition step, by using a focal position estimation model that is generated through machine learning training and that receives information based on an image as its input and outputs information indicating a focal position when in focus according to a position in the image.

**Fig.1**

EP 4 408 007 A1

**Description**

TECHNICAL FIELD

The present invention relates to a focal position estimation method, a focal position estimation program, and a focal position estimation system for estimating a focal position when in focus corresponding to an estimation target image, a model generation method, a model generation program, and a model generation system for generating a focal position estimation model used in estimating a focal position when in focus, and a focal position estimation model.

BACKGROUND

Conventionally, a virtual slide scanner has been used that uses an image obtained by imaging (scanning) a slide glass as a virtual microscope image. In such a device, it is necessary to perform imaging with the focal position on the sample. In response to this, it has been proposed to estimate an appropriate focal position based on an image obtained by imaging the sample. For example, Japanese Unexamined Patent Publication No. 2013-50713, which is Patent Literature 1, describes estimation using a machine learning algorithm.

SUMMARY

In the conventional method described in Patent Literature 1, one focal position is estimated for one entire image. However, if an object such as a sample captured in an image has unevenness or an inclination, the focal position (Z position) where the object is in focus differs depending on a position (XY position) in the image. In such a case, one focal position for the entire image estimated by using the conventional method described above is not necessarily appropriate.

An embodiment of the present invention has been made in view of the above, and an object thereof is to provide a focal position estimation method, a focal position estimation program, and a focal position estimation method capable of performing an image-based estimation of a focal position according to the position of the image, a model generation method, a model generation program, a model generation system, and a focal position estimation model.

In order to achieve the aforementioned object, a focal position estimation method according to an embodiment of the present invention is a focal position estimation method for estimating a focal position when in focus corresponding to an estimation target image. The focal position estimation method includes: an estimation target image acquisition step for acquiring an estimation target image; and a focal position estimation step for estimating a focal position when in focus corresponding to the estimation target image and according to a position in the estimation target image, from the estimation target image acquired in the estimation target image acquisition step, by using a focal position estimation model that is generated through machine learning training and that receives information based on an image as its input and outputs information indicating a focal position when in focus according to a position in the image.

In the focal position estimation method according to the embodiment of the present invention, the focal position when in focus according to the position in the estimation target image is estimated by using the focal position estimation model. As described above, according to the focal position estimation method according to the embodiment of the present invention, an image-based estimation of the focal position can be performed according to the position of the image.

In the focal position estimation method, the focal position estimation model may be generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step. According to this configuration, the focal position when in focus according to the position in the estimation target image is estimated by using the focal position estimation model that is generated by generating the focus information for learning and performing machine learning training. Therefore, it is possible to appropriately and reliably estimate the focal position based on the image.

The focal position estimation model may be generated, in the focus information for learning generation step, by calculating one focal position when in focus, which is common to the plurality of learning images, according to a position in each learning image from the focal position when in focus according to a position in each of the plurality of learning images indicated by the information acquired by using the focal position estimation model during training and generating the focus information for learning from the one focal position when in focus for each of the plurality of learning images. According to this configuration, it is possible to more appropriately and reliably estimate the focal position based on the image.

In the focal position estimation step, a feature quantity of the estimation target image may be acquired from the estimation target image acquired in the estimation target image acquisition step by using a feature quantity output model that receives information based on an image as its input and outputs a feature quantity of the image input to the focal position estimation model, and the focal position when in focus corresponding to the estimation target image and according to a position in the estimation target image may be estimated from the feature quantity by using the focal position estimation model. The feature quantity output model may be generated, in the learning step, by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison. According to this configuration, the feature quantity of the estimation target image is acquired by using the feature quantity output model, and the focal position when in focus according to the position in the estimation target image is estimated from the feature quantity. By performing an estimation using the feature quantity, it is possible to more appropriately and reliably estimate the focal position based on the image.

The feature quantity output model may be generated, in the learning step, by performing the machine learning training so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions. According to this configuration, it is possible to more appropriately and reliably estimate the focal position based on the image.

In the focal position estimation step, an inclination of an imaging target captured in the estimation target image may be estimated from the estimated focal position when in focus according to a position in the estimation target image. According to this configuration, it is possible to appropriately estimate the inclination of the imaging target captured in the estimation target image.

In the focal position estimation step, a focal position when imaging an imaging target captured in the estimation target image may be controlled based on the estimated focal position when in focus according to a position in the estimation target image. According to this configuration, it is possible to appropriately image the imaging target. For example, it is possible to acquire an image that is in focus at all positions.

In the focal position estimation step, information indicating an in-focus state according to a position in the estimation target image may be output based on the estimated focal position when in focus according to a position in the estimation target image. According to this configuration, it is possible to understand the in-focus state according to the position in the estimation target image. For example, it is possible to understand a position that is in focus and a position that is out of focus in the estimation target image.

In the estimation target image acquisition step, a plurality of estimation target images of the same imaging target at different focal positions may be acquired. In the focal position estimation step, a focal position when in focus according to a position in the estimation target image may be estimated from at least one estimation target image among the plurality of estimation target images acquired in the estimation target image acquisition step, and one image may be generated from the plurality of estimation target images based on the estimated focal position. According to this configuration, it is possible to acquire an appropriate image. For example, it is possible to acquire an images that is in focus at all positions.

Incidentally, one embodiment of the present invention can be described not only as the invention of the focal position estimation method as described above but also as inventions of a focal position estimation program and a focal position estimation system as follows. These differ only in category, but are substantially the same invention and have similar functions and effects.

A focal position estimation program according to an embodiment of the present invention is a focal position estimation program causing a computer to function as a focal position estimation system for estimating a focal position when in focus corresponding to an estimation target image. The focal position estimation program causes the computer to function as: estimation target image acquisition means for acquiring an estimation target image; and focal position estimation means for estimating a focal position when in focus corresponding to the estimation target image and according to a position in the estimation target image, from the estimation target image acquired by the estimation target image acquisition means, by using a focal position estimation model that is generated through machine learning training and that receives information based on an image as its input and outputs information indicating a focal position when in focus according to a position in the image.

In the focal position estimation program, the focal position estimation model may be generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

A focal position estimation system according to an embodiment of the present invention is a focal position estimation system for estimating a focal position when in focus corresponding to an estimation target image. The focal position estimation system includes: estimation target image acquisition means for acquiring an estimation target image; and focal position estimation means for estimating a focal position when in focus corresponding to the estimation target image and according to a position in the estimation target image, from the estimation target image acquired by the estimation target image acquisition means, by using a focal position estimation model that is generated through machine learning training and that receives information based on an image as its input and outputs information indicating a focal position when in focus according to a position in the image.

In the focal position estimation system, the focal position estimation model may be generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information

for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

In order to achieve the aforementioned object, a model generation method according to an embodiment of the present invention is a model generation method for generating a focal position estimation model that receives information based on an image as its input and outputs information indicating a focal position when in focus according to a position in the image. The model generation method includes: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

According to the model generation method according to the embodiment of the present invention, the focus information for learning is generated, and machine learning training is performed to generate the focal position estimation model. By using the generated focal position estimation model, the focal position when in focus according to the position in the estimation target image is estimated. As described above, according to the model generation method according to the embodiment of the present invention, an image-based estimation of the focal position can be performed according to the position of the image.

In the focus information for learning generation step, one focal position when in focus, which is common to the plurality of learning images, according to a position in each learning image may be calculated from the focal position when in focus according to a position in each of the plurality of learning images indicated by the information acquired by using the focal position estimation model during training, and the focus information for learning may be generated from the one focal position when in focus for each of the plurality of learning images. According to this configuration, a focal position estimation model capable of more appropriately and reliably estimating the focal position based on the image is generated.

In the learning step, a feature quantity output model that receives information based on an image as its input and outputs a feature quantity of the image input to the focal position estimation model may be generated. In the learning step, the feature quantity output model may be generated by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison. According to this configuration, a feature quantity output model is generated that outputs a feature quantity used to estimate the focal position when in focus according to the position in the estimation target image. By performing an estimation using the feature quantity, it is possible to more appropriately and reliably estimate the focal position based on the image.

In the learning step, the machine learning training may be performed so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions. According to this configuration, it is possible to more appropriately and reliably estimate the focal position based on the image.

Incidentally, one embodiment of the present invention can be described not only as the invention of the model generation method as described above but also as inventions of a model generation program and a model generation system as follows. These differ only in category, but are substantially the same invention and have similar functions and effects.

A model generation program according to an embodiment of the present invention is a model generation program causing a computer to function as a model generation system for generating a focal position estimation model that receives information based on an image as its input and outputs information indicating a focal position when in focus according to a position in the image, the model generation program causes the computer to function as: learning image acquisition means for acquiring a plurality of learning images of the same imaging target at different focal positions, each of which is associated with a focal position, and in-focus position information indicating focal positions when in focus for the plurality of learning images; focus information for learning generation means for inputting information based on each of the plurality of learning images acquired by the learning image acquisition means to the focal position estimation model during training, performing a calculation according to the focal position estimation model to acquire information indicating a focal position when in focus according to a position in each of the plurality of learning images, and generating focus information for learning indicating a focal position when in focus according to a position in an image used for machine learning training, from the acquired information and the in-focus position information, for each of the plurality of learning images; and learning means for performing machine learning training for generating the focal position estimation model by using the information based on each of the plurality of learning images acquired by the learning image acquisition means and the focus information for learning corresponding to each of the plurality of learning images generated by the focus information for learning generation means.

A model generation system according to an embodiment of the present invention is a model generation system for generating a focal position estimation model that receives information based on an image as its input and outputs information indicating a focal position when in focus according to a position in the image. The model generation system includes: learning image acquisition means for acquiring a plurality of learning images of the same imaging target at different focal positions, each of which is associated with a focal position, and in-focus position information indicating focal positions when in focus for the plurality of learning images; focus information for learning generation means for inputting information based on each of the plurality of learning images acquired by the learning image acquisition means to the focal position estimation model during training, performing a calculation according to the focal position estimation model to acquire information indicating a focal position when in focus according to a position in each of the plurality of learning images, and generating focus information for learning indicating a focal position when in focus according to a position in an image used for machine learning training, from the acquired information and the in-focus position information, for each of the plurality of learning images; and learning means for performing machine learning training for generating the focal position estimation model by using the information based on each of the plurality of learning images acquired by the learning image acquisition means and the focus information for learning corresponding to each of the plurality of learning images generated by the focus information for learning generation means.

In addition, the focal position estimation model itself according to an embodiment of the present invention is also an invention having a novel configuration. That is, the focal position estimation model according to the embodiment of the present invention is a focal position estimation model that is generated through machine learning training and that causes a computer to function to receive information based on an image as its input and output information indicating a focal position when in focus according to a position in the image.

The focal position estimation model may be generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

According to the embodiment of the present invention, an image-based estimation of the focal position can be performed according to the position of the image.

BRIEF DESCRIPTION OF THE DRAWINGS

FIG. 1 is a diagram showing the configurations of a focal position estimation system and a model generation system according to an embodiment of the present invention.

FIG. 2 is a diagram showing an example of estimation in the focal position estimation system.

FIG. 3 is a diagram showing an example of a specific aspect of estimation in the focal position estimation system.

FIGS. 4A and 4B are diagrams schematically showing focal position maps for images.

FIG. 5 is a focal position map for explaining the estimation of the inclination of an imaging target.

FIG. 6 is a diagram for explaining the estimation of the inclination of an imaging target.

FIG. 7 is a diagram for explaining the estimation of the inclination of an imaging target.

FIG. 8 is a diagram for explaining the estimation of the inclination of an imaging target.

FIG. 9 is a diagram for explaining imaging using an estimation result.

FIG. 10 is a diagram for explaining imaging using an estimation result.

FIG. 11 is an example of an image showing an in-focus state.

FIG. 12 is a diagram showing an example of generating one image from a plurality of estimation target images.

FIG. 13 is a diagram showing learning images and focal position maps of estimation results.

FIG. 14 is a diagram showing cutting out of a learning image.

FIG. 15 is a diagram showing the generation of a collection map from a focal position map of estimation results.

FIG. 16 is a diagram showing the generation of a focal position map for learning from a collection map.

FIG. 17 is a diagram showing the repetition of encoding and decoding training.

FIG. 18 is a diagram for explaining the generation of an encoder through machine learning training.

FIG. 19 is a diagram for explaining the generation of an encoder through machine learning training.

FIG. 20 is a diagram for explaining the generation of a decoder through machine learning training.

FIG. 21 is a flowchart showing a focal position estimation method, which is a process performed by the focal position estimation system according to the embodiment of the present invention.

FIG. 22 is a flowchart showing a model generation method, which is a process performed by the model generation system according to the embodiment of the present invention.

FIG. 23 is a diagram showing an example of a focal position when in focus estimated for each pixel position.

FIGS. 24A and 24B are graphs of the focal position of an estimation target image and the focal position when in focus estimated from the estimation target image.

FIGS. 25A to 25D are diagrams showing examples of two-dimensional display of feature quantities at the time of output from each block of an encoder.

FIGS. 26A to 26F are diagrams showing specific examples of estimation according to the present embodiment.

FIGS. 27A to 27F are diagrams showing specific examples of estimation according to the present embodiment.

FIGS. 28A to 28F are diagrams showing specific examples of estimation according to the present embodiment.

FIGS. 29A to 29F are diagrams showing specific examples of estimation according to the present embodiment.

FIG. 30A is a diagram showing the configuration of a focal position estimation program according to an embodiment of the present invention together with a recording medium, and FIG. 30B is a diagram showing the configuration of a model generation program according to an embodiment of the present invention together with a recording medium.

DETAILED DESCRIPTION

Hereinafter, embodiments of a focal position estimation method, a focal position estimation program, a focal position estimation system, a model generation method, a model generation program, a model generation system, and a focal position estimation model according to the present invention will be described in detail with reference to the diagrams. In addition, in the description of the diagrams, the same elements are denoted by the same reference numerals, and repeated description thereof will be omitted.

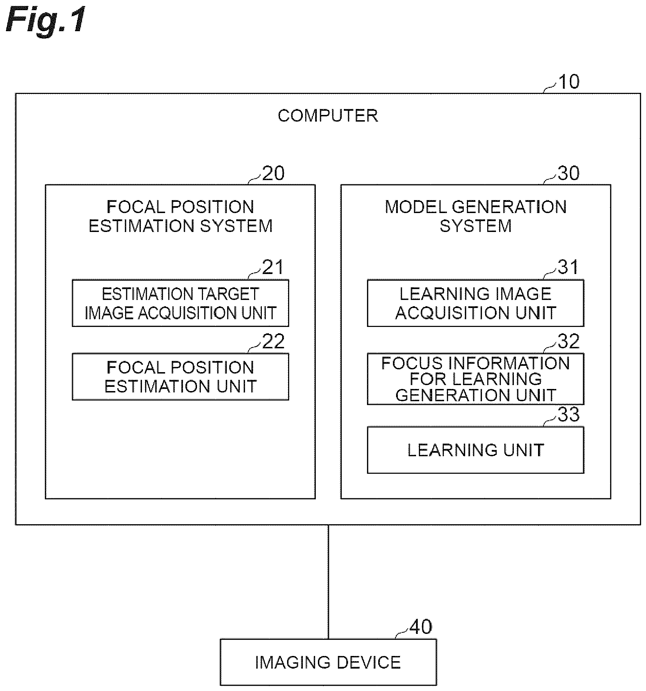

FIG. 1 shows a computer 10 that is a focal position estimation system and a model generation program according to the present embodiment. The computer 10 includes a focal position estimation system 20 and a model generation system 30 as functional components. The focal position estimation system 20 is a system (device) for estimating a focal position when in focus corresponding to an estimation target image. The model generation system 30 is a system (device) for generating a focal position estimation model that receives information based on an image as its input and outputs information indicating a focal position when in focus according to a position in the image. The focal position estimation model is used for estimation by the focal position estimation system 20.

As shown in FIG. 1, an imaging device 40 is connected to the computer 10. The imaging device 40 is a device that performs imaging or the like to obtain an image. The computer 10 acquires the image obtained by the imaging or the like of the imaging device 40. The focal position estimation system 20 and the model generation system 30 perform processing using the image acquired from the imaging device 40.

The imaging device 40 may be included in, for example, an inspection device for inspecting devices such as semiconductor devices. In addition, the imaging device 40 may be an observation device that images a biological sample placed on a slide glass and observes the image of the captured biological sample. In this case, the image obtained by the imaging of the imaging device 40 becomes, for example, an image for realizing a virtual microscope. In addition, the sample is not limited to a device such as a semiconductor device or a biological sample placed on a slide glass, and the imaging device 40 may be a microscope device used for other purposes. As the imaging device 40 itself, a conventional one can be used. In addition, the imaging device 40 may have a function that can be controlled by the focal position estimation system 20, as will be described later.

According to the function of the computer 10, a focal position when in focus corresponding to the image obtained by the imaging or the like of the imaging device 40 is estimated. For example, based on this estimation, the imaging device 40 can perform imaging again with the imaging target in focus. Alternatively, it is possible to understand whether or not the image has been captured with the imaging target in focus.

In addition, the computer 10 only needs to be able to acquire images to be processed by the focal position estimation system 20 and the model generation system 30, and does not need to directly acquire images from the imaging device 40.

The computer 10 is a conventional computer including hardware, such as a processor (for example, a CPU (Central Processing Unit)), a memory, and a communication module. In addition, the computer 10 may be a computer system including a plurality of computers. In addition, the computer 10 may be configured by cloud computing. Each function of the computer 10, which will be described later, is realized by the operations of these components by a program or the like. The computer 10 and the imaging device 40 are connected to each other so that information can be transmitted and received therebetween. In FIG. 1, the focal position estimation system 20 and the model generation system 30 are realized by the same computer 10, but may be realized by separate computers 10.

Next, functions of the focal position estimation system 20 and the model generation system 30 included in the computer 10 according to the present embodiment will be described. As shown in FIG. 1, the focal position estimation system 20 includes an estimation target image acquisition unit 21 and a focal position estimation unit 22.

The estimation target image acquisition unit 21 is estimation target image acquisition means for acquiring an estimation target image. For example, the estimation target image acquisition unit 21 receives and acquires an image captured by the imaging device 40 from the imaging device 40. The estimation target image acquisition unit 21 divides the image acquired from the imaging device 40 into images with sizes that can be estimated by the focal position estimation unit 22, and sets each of the divided images as an estimation target image. The size that can be estimated by the focal position estimation unit 22 will be described later. In addition, the acquisition of an estimation target image does not need to be performed by using the above method, and may be performed by using any method other than the above method. The estimation target image acquisition unit 21 outputs the acquired estimation target image to the focal position estimation unit 22.

The focal position estimation unit 22 is focal position estimation means for estimating, from the estimation target image acquired by the estimation target image acquisition unit 21, a focal position when in focus corresponding to the estimation target image and according to a position in the estimation target image by using a focal position estimation model. The focal position estimation model is a model that is generated through machine learning training and that receives information based on an image as its input and outputs information indicating a focal position when in focus according to a position in the image. The focal position estimation unit 22 may acquire, from the estimation target image acquired by the estimation target image acquisition unit 21, the feature quantity of the estimation target image by using a feature quantity output model and estimate, from the feature quantity, a focal position when in focus corresponding to the estimation target image and according to a position in the estimation target image by using a focal position estimation model. The feature quantity output model is a model that receives information based on an image as its input and outputs the feature quantity of the image input to the focal position estimation model.

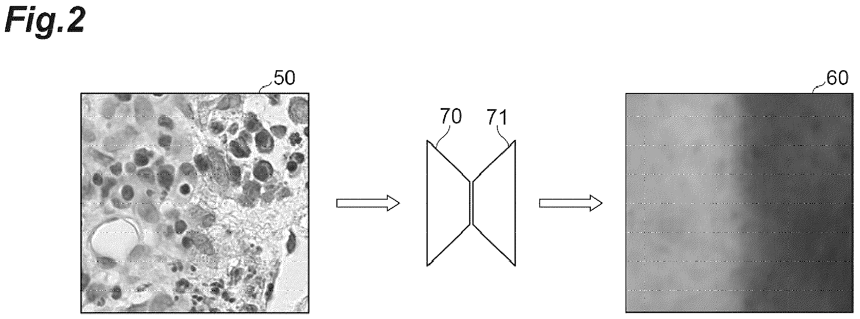

For example, the focal position estimation unit 22 estimates a focal position when in focus corresponding to the estimation target image and according to a position in the estimation target image as follows. In the present embodiment, the focal position estimation unit 22 estimates, as the focal position when in focus according to the position in the estimation target image, a focal position when in focus of each pixel of the estimation target image. FIG. 2 shows examples of an estimation target image 50 and a focal position map 60 indicating a focal position when in focus estimated from the estimation target image 50. The focal position map 60 is data having a focal position when in focus of a position corresponding to each pixel of the estimation target image 50. Since the focal position map 60 has information corresponding to each pixel of the estimation target image 50, the focal position map 60 can be an image having the same size as the estimation target image 50.

The focal position map 60 has, for each pixel, a value (information) indicating a focal position when in focus at the position of the pixel (for example, the XY position of the pixel). For example, the value of each pixel of the focal position map 60 indicates a direction (direction towards the depth or the front for the image) and a distance from the focal position when the estimation target image 50 is captured to the focal position when in focus. The value is, for example, a value obtained by subtracting a distance corresponding to the position of the imaging target when the estimation target image 50 is captured (distance from the position of a lens such as an objective lens to the position of the imaging target when the estimation target image 50 is captured) from a distance corresponding to the position (focal position) of the imaging target when in focus (for example, a distance from the position of a lens such as an objective lens to the position of the imaging target when in focus, and corresponds to the focal length of the lens).

That is, in this case, the value is a value indicating a focal position when in focus in a coordinate system in which the focal position when the estimation target image 50 is captured is 0. If the distance to the position of the imaging target when the estimation target image 50 is captured is longer than the distance to the position of the imaging target when in focus, the value is negative. If the distance to the position of the imaging target when the estimation target image 50 is captured is shorter than the distance to the position of the imaging target when in focus, the value is positive. The focal position when in focus is a position where the imaging target captured in the estimation target image 50 is in focus. In addition, the distance to the imaging target when in focus refers to a distance from the position of a lens such as an objective lens to the position of the imaging target in a state in which the imaging target captured in the estimation target image 50 is in focus, and generally corresponds to the focal length of the lens. By performing imaging in a state in which the position of the lens or the like is changed by the above-described difference from the position of the lens or the like when the estimation target image 50 is captured, it is possible to capture an image in which the imaging target is in focus. The focal position map 60 shown in FIG. 2 shows the numerical value of each pixel in terms of color density.

The value of the focal position map 60, that is, a value in the imaging direction, may be a value in a preset unit. For example, a unit length may be set in advance (for example, 50 $\mu$m), and the value may be a value with the unit length set to 1. In the following examples as well, the value in the imaging direction, such as a value indicating the focal position, is indicated by this numerical value.

In the conventional method, information regarding one focal position is estimated for one entire image as described above. On the other hand, in the present embodiment, as described above, a focal position (for example, Z position) when in focus according to a position (for example, XY position) in the estimation target image 50 is estimated from one estimation target image 50. Therefore, even if the imaging target such as a sample captured in one estimation target image 50 has unevenness or an inclination, an appropriate focal position when in focus according to the position in the estimation target image 50 is estimated. In addition, the information indicating the estimated focal position when in focus does not need to be the focal position map 60 described above.

The focal position estimation unit 22 performs the above estimation by using an encoder (feature extraction layer) 70 that is a feature quantity output model and a decoder (identification layer) 71 that is a focal position estimation model. The encoder 70 and the decoder 71 are learned models generated by the model generation system 30. The focal position estimation unit 22 receives and stores the encoder 70 and the decoder 71 generated by the model generation system 30 in advance and uses the encoder 70 and the decoder 71 for estimation.

The encoder 70 is a model that receives information based on an image as its input and outputs the feature quantity of the image input to the decoder 71. The feature quantity that is an output from the decoder 71 is information indicating the feature of the input image. In the present embodiment, the feature reflects a focal position when the image is captured. That is, the encoder 70 is an optical model related to optical characteristics. The feature quantity is, for example, a vector with dimensions set in advance (for example, 1024 dimensions).

The encoder 70 includes, for example, a neural network. The neural network may be a multilayer neural network. That is, the encoder 70 may be generated by deep learning. In addition, the neural network may be a convolutional neural network (CNN).

Neurons for inputting image-based information are provided in the input layer of the encoder 70. For example, the information input to the encoder 70 is the pixel value of each pixel of the image. In this case, as many neurons as the number of pixels in the image are provided in the input layer, and the pixel value of the corresponding pixel is input to each neuron. The image related to the information input to the encoder 70 is an image having a preset size. The size of the image is the size of an image that can be estimated at one time by the focal position estimation unit 22.

In addition, information input to the encoder 70 may be other than the pixel value of each pixel as long as the information is based on the image. For example, the information may be a feature quantity to be input to the encoder 70, which is obtained by performing preprocessing, such as conventional image processing, on an image in order to reduce the influence of the imaging environment. By performing such preprocessing, it is possible to improve the efficiency of machine learning and the accuracy of the generated encoder 70.

Neurons for outputting feature quantities are provided in the output layer of the encoder 70. For example, as many neurons as the number of dimensions of the vector of feature quantities are provided.

The decoder 71 is a model that receives the feature quantity of an image output from the encoder 70 as its input and outputs information indicating a focal position when in focus according to a position in the image. The decoder 71 outputs, for example, the focal position map 60 as an estimation result of the focal position when in focus. Alternatively, the decoder 71 may output information indicating the focal position itself when in focus of a position corresponding to each pixel of the estimation target image 50 (for example, a distance corresponding to the focal position when in focus). In addition, candidates for the value described above may be set in advance for the position corresponding to each pixel of the estimation target image 50, and the decoder 71 may output, for each of the candidates, a value indicating the degree to which the candidate is appropriate. For example, the candidates for the value are set to +1, 0, -1, -2, ..., and the decoder 71 outputs a value indicating the degree of validity for each candidate. For example, a candidate for which the value is the highest is set as the above value.

The decoder 71 includes, for example, a neural network. The neural network may be a multilayer neural network. That is, the decoder 71 may be generated by deep learning. In addition, the neural network may be a convolutional neural network (CNN).

Neurons for inputting feature quantities are provided in the input layer of the decoder 71. For example, neurons corresponding to the neurons provided in the output layer of the encoder 70 are provided in the input layer. That is, as many neurons as the number of neurons provided in the output layer of the encoder 70 are provided in the input layer. Neurons for outputting the estimation result of the focal position when in focus described above are provided in the output layer of the decoder 71. For example, as many neurons as the number of pixels of the estimation target image 50 for outputting the focal position map 60 are provided in the output layer.

More detailed examples of the encoder 70 and decoder 71 will be described. The encoder 70 has 15 layers of neurons. In these layers, the encoder 70 halves the resolution by max pooling every three blocks and doubles the number of channels. One block is configured by Conv2d, batch normalization, and ReLU. The number of channels in each layer is 3, 64, 128, 256, 512, and 1024 in order from the input side.

The decoder 71 has three layers of neurons that are fully connected layers. The decoder 71 inputs the feature quantity output from the encoder 70 by connecting block (final layer) outputs of 1024 channels to each other.

Alternatively, the decoder 71 has 12 layers + 1 layer of neurons. In these layers, the decoder 71 doubles the resolution by up-sampling every three blocks and halves the number of channels. One block is configured by Conv2d, batch normalization, and ReLU. The last layer is a 64 to 1 convolution layer. The decoder 71 inputs the feature quantity output from the encoder 70 by connecting block outputs of 1024, 512, and 256 channels to each other.

In addition, unlike in the present embodiment, when estimating one focal position when in focus from an image rather than for each position in the image, for example, for each pixel, it is conceivable that the encoder includes a convolutional layer and the decoder includes a fully connected layer. In this case, the encoded feature quantity is the average value of the image region (which becomes an average space for each channel by the global average pooling layer). For this reason, if the imaging target captured in the image has unevenness or an inclination, the feature quantity becomes a mixture of features with different imaging directions (Z positions). Therefore, the feature quantity do not indicate correct characteristics.

In the present embodiment, the encoder 70 may not have a global average pooling layer and may output the feature quantity without spatial averaging. This reduces the amount of mixing of feature quantities. For example, mixing only at the local region level of convolution occurs.

In addition, the encoder 70 and the decoder 71 may be other than the neural network.

The encoder 70 and the decoder 71 may be for a specific type of image. For example, the specific type of image may be an image obtained by detecting radiation from the imaging target (an image used for light emission and heat generation analysis), an image obtained by detecting light from the imaging target when the imaging target is irradiated with light (an image used for pattern analysis), or an image obtained by detecting the electrical characteristics of the imaging target when the imaging target is irradiated with light (an image used for laser analysis). In addition, the type of image may be the type of the imaging target captured in the image.

In this case, when generating the encoder 70 and the decoder 71 by machine learning training and when estimating the focal position when in focus by using the encoder 70 and the decoder 71, the specific type of image is used. Similarly, the encoder 70 and the decoder 71 may be for a specific type of imaging device 40. Thus, by using the encoder 70 and the decoder 71 for a specific type of image or for a specific type of imaging device 40, more appropriate estimation according to the type of image or the type of imaging device 40 can be performed. However, the encoder 70 and the decoder 71 may be common to a plurality of types of images or a plurality of types of imaging devices 40.

The encoder 70 and the decoder 71 are assumed to be used as program modules that are a part of artificial intelligence software. For example, the encoder 70 and the decoder 71 are used in a computer including a processor and a memory, and the processor of the computer operates according to instructions from the models stored in the memory. For example, the processor of the computer operates to input information to the models, perform calculations according to the models, and output results from the models according to the instructions. Specifically, according to the instructions, the processor of the computer operates to input information to the input layer of the neural network, perform calculations based on parameters such as weighting coefficients for learning in the neural network, and output results from the output layer of the neural network.

The focal position estimation unit 22 receives the estimation target image 50 from the estimation target image acquisition unit 21. The focal position estimation unit 22 inputs information based on the estimation target image 50 to the encoder 70, performs a calculation according to the encoder 70, and acquires the feature quantity of the estimation target image 50 that is an output from the encoder 70. The focal position estimation unit 22 inputs the acquired feature quantity to the decoder 71, performs a calculation according to the decoder 71, and acquires the focal position map 60, which is an output from the decoder 71, as an estimation result of the focal position when in focus according to the position in the estimation target image 50.

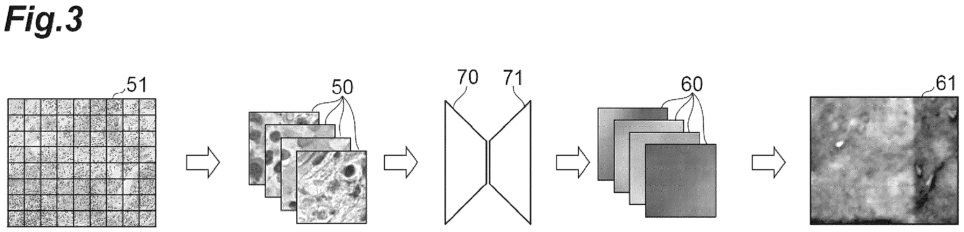

As shown in FIG. 3, the estimation target image 50 may be a plurality of images (image patches) obtained by dividing an image 51 acquired from the imaging device 40. The focal position estimation unit 22 acquires the focal position maps 60 from a plurality of estimation target images 50 by using the encoder 70 and the decoder 71. The focal position estimation unit 22 may generate a focal position map 61 for the image 51 acquired from the imaging device 40 by connecting (tiling) the focal position maps 60 acquired from the respective estimation target images 50.

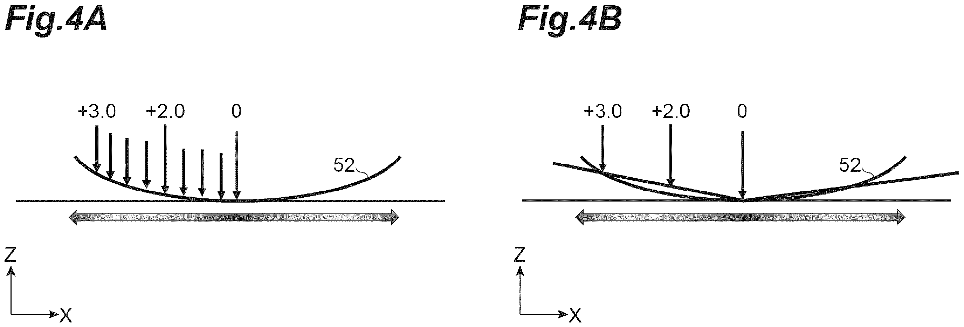

FIG. 4A schematically shows the focal position map 61 for the image 51 acquired from the imaging device 40 in the present embodiment. FIG. 4B schematically shows a comparative example of the present embodiment, for example, a focal position map when one focal position when in focus is estimated for each estimation target image 50 obtained by dividing the image 51 acquired from the imaging device 40. FIGS. 4A and 4B are focal positions when in focus for each position of an imaging target 52 on a plane (XZ plane) when the imaging direction (Z-axis direction) is viewed from the side (Y axis).

In the present embodiment, since the focal position when in focus is estimated for each pixel of the image 51, it is possible to accurately understand (measure) the inclination or distortion of the imaging target 52 (sample). In the present embodiment, it is assumed that the focal position when in focus in the imaging direction indicated by the focal position map 60 is the position of the imaging target. For example, in the example shown in FIG. 4A, the warpage increases as the position is further from the center of the imaging target 52, but this can be accurately understood. On the other hand, in the example shown in FIG. 4B, the distance between the positions in the X direction in which the focal position when in focus is estimated is large. Therefore, it is not possible to accurately understand (measure) the inclination or distortion of the imaging target 52. For example, in the example shown in FIG. 4B, if linear interpolation is performed from the estimated focal positions when in focus, the line is shifted from the imaging target 52.

The focal position estimation unit 22 may output the acquired focal position map 60 or the focal position map 61 for the image 51 acquired from the imaging device 40. For example, the focal position estimation unit 22 may output this in a format (for example, display) that the user of the computer 10 can recognize. Alternatively, the focal position estimation unit 22 may transmit this to another device or module.

In addition, the focal position estimation unit 22 may use the acquired focal position map 60 or the focal position map 61 for the image 51 acquired from the imaging device 40, for example, as follows.

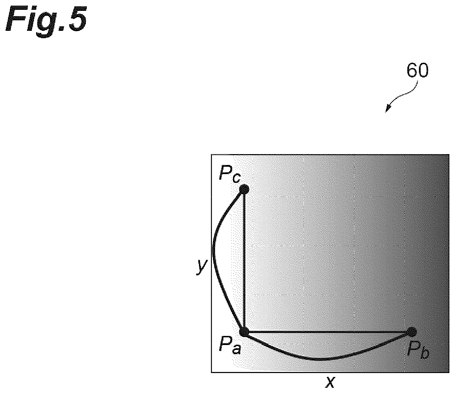

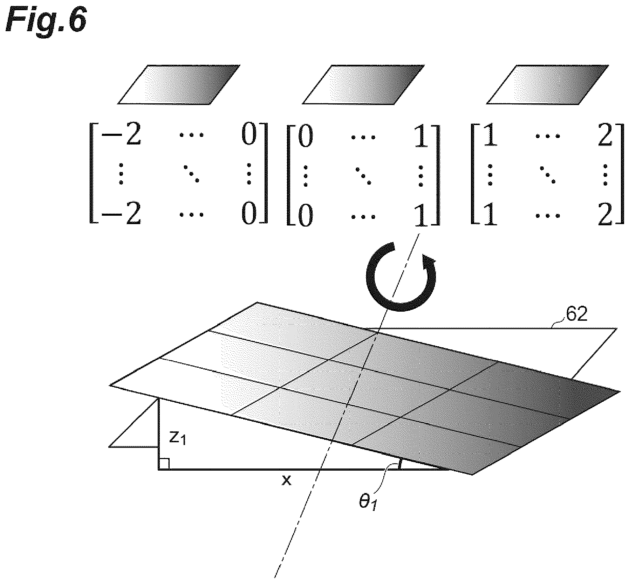

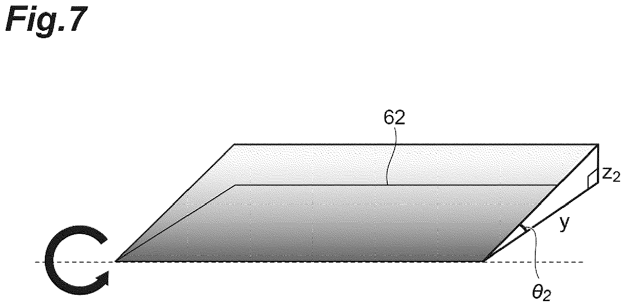

The focal position estimation unit 22 may estimate, from the estimated focal position when in focus according to the position in the estimation target image 50, the inclination of the imaging target captured in the estimation target image 50. For example, the focal position estimation unit 22 estimates the inclination of the imaging target captured in the estimation target image 50 as follows. The focal position estimation unit 22 estimates the inclination of the imaging target for each of the X axis and the Y axis, which are two coordinate axes parallel to each side of the focal position map 60 shown in FIG. 5. For example, the focal position estimation unit 22 estimates an angle $\theta_1$ of the inclination of the imaging target on the X axis with respect to a plane 62 perpendicular to the imaging direction (Z-axis direction), which is shown in FIG. 6, and an angle $\theta_2$ of the inclination of the imaging target on the Y axis with respect to the plane 62 perpendicular to the imaging direction (Z-axis direction), which is shown in FIG. 7.

FIG. 6 shows information indicating a focal position when in focus of the position of each pixel indicated by the focal position map 60 (specifically, information regarding a focal position when in focus with respect to a focal position when an image is captured) (values such as -2, 0, and 1 in the matrix). FIG. 6 shows an example of a case where the imaging target is inclined in the X-axis direction, specifically, a case where the right side is lowered. FIG. 7 shows an example of a case where the imaging target is inclined in the Y-axis direction, specifically, a case where the front side is lowered.

The focal position estimation unit 22 calculates the angles $\theta_1$ and $\theta_2$ by using the following Equations.

$$\theta_1 = \tan^{-1} \frac{z_1}{x}$$

$$\theta_2 = \tan^{-1} \frac{z_2}{y}$$

Here, x is a length in the X-axis direction used to calculate the angle $\theta_1$ according to the position of the pixel in the focal position map 60. $z_1$ is the amount of shift of the focal position when in focus in the imaging direction (Z-axis direction) corresponding to x. y is a length in the Y-axis direction used to calculate the angle $\theta_2$ according to the position of the pixel in the focal position map 60. $z_2$ is the amount of shift of the focal position when in focus in the imaging direction (Z-axis direction) corresponding to y.

x and y are determined based on the position of the pixel in the focal position map 60, as shown in FIG. 5. For example, x is the difference in the X-axis direction between the positions of two preset pixels $P_a$ and $P_b$ in the focal position map 60, which are used in estimating the inclination and are separated from each other in the X-axis direction. That is, x = $|P_b - P_a|$ (X-axis component only). y is the difference in the Y-axis direction between the positions of two preset pixels $P_a$ and $P_c$ in the focal position map 60, which are used in estimating the inclination and are separated from each other in the Y-axis direction. That is, y = $|P_c - P_a|$ (Y-axis component only). The pixels $P_a$, $P_b$, and $P_c$ in the focal position map 60 whose inclinations are to be estimated may be arbitrarily set.

$z_1$ and $z_2$ are calculated from the focal position when in focus corresponding to each pixel indicated by the focal position map 60 as shown in FIG. 6. For example, $z_1$ is a difference between focal positions $Z_a$ and $Z_b$ when in focus corresponding to the two pixels $P_a$ and $P_b$. That is, $z_1 = |Z_b - Z_a|$. $z_2$ is a difference between focal positions $Z_a$ and $Z_c$ when in focus corresponding to the two pixels $P_a$ and $P_c$. That is, $z_2 = |Z_c - Z_a|$.

The focal position estimation unit 22 may estimate the inclination for a plurality of positions of the imaging target (that is, the focal position map 60) and calculate a statistical value such as an average value or a median value. This makes it possible to improve the accuracy of the estimated inclination of the imaging target.

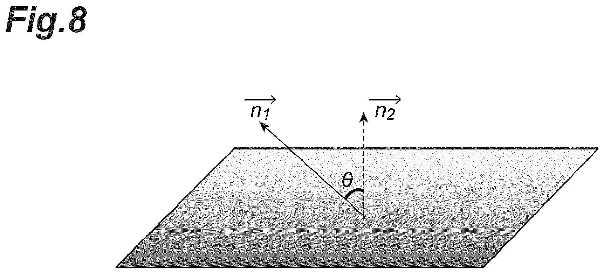

Alternatively, the focal position estimation unit 22 may estimate the inclination of the imaging target as follows. The focal position estimation unit 22 calculates a least squares plane of the focal position when in focus from the position of each pixel and the focal position when in focus of the position of each pixel indicated by the focal position map 60. The coordinate system at this time is, for example, a coordinate system in which the plane of the image of the focal position map 60 is the XY plane and the direction perpendicular to the plane is the Z axis. The focal position estimation unit 22 calculates a normal vector $n_1 = (a, b, c)$ of the calculated least squares plane shown in FIG. 8. The focal position estimation unit 22 calculates an angle $\theta$ of the normal vector $n_1$ of the least squares plane with respect to a normal vector $n_2 = (0, 0, 1)$ of the XY plane as the inclination of the imaging target by using the following Equation stored in advance.

$$\theta = \cos^{-1} \frac{\overrightarrow{n_1} \cdot \overrightarrow{n_2}}{|\overrightarrow{n_1}||\overrightarrow{n_2}|}$$

The focal position estimation unit 22 may estimate the inclination by using any method other than the above as long as the inclination of the imaging target captured in the estimation target image 50 is estimated from the focal position map 60. In addition, the focal position estimation unit 22 may estimate any things other than the above-described angle as the inclination of the imaging target.

The focal position estimation unit 22 may output information indicating the estimated inclination of the imaging target. For example, the focal position estimation unit 22 may output this in a format (for example, display) that the user of the computer 10 can recognize. Alternatively, the focal position estimation unit 22 may transmit this to another device or module.

In addition, the focal position estimation unit 22 may use the estimated inclination of the imaging target to control the imaging device 40. In this case, the imaging device 40 is configured to be able to control the inclination (posture) of the imaging target as follows, for example. The imaging device 40 has a mounting unit that is a member on which an imaging target is mounted during imaging. The mounting unit is configured such that the inclination of the mounting surface on which the imaging target is mounted with respect to the imaging direction is variable. That is, the imaging device 40 can perform tilt correction of the imaging target. As the imaging device 40, a conventional one capable of controlling the inclination of the imaging target can be used.

The focal position estimation unit 22 controls the imaging device 40 so that the estimated inclination of the imaging target is eliminated during imaging. Specifically, the focal position estimation unit 22 controls the imaging device 40 to incline the imaging target opposite to the estimated inclination of the imaging target. The controlled imaging device 40 adjusts the inclination of the imaging target during imaging by operating the mounting unit, for example. In this manner, the focal position estimation unit 22 controls tilt correction in the imaging device 40. By making the imaging device 40 image the imaging target after the tilt correction is performed, it is possible to acquire an image in which the inclination of the imaging target is appropriate. In addition, the tilt correction may be controlled manually by the user of the computer 10 by checking the information indicating the inclination of the imaging target output from the focal position estimation unit 22.

The focal position estimation unit 22 may control the focal position when imaging the imaging target captured in the estimation target image 50 based on the estimated focal position when in focus according to the position in the estimation target image 50. This control is control when the imaging target is imaged again after the estimation target image 50 is obtained. For example, the focal position estimation unit 22 controls the focal position when imaging the imaging target captured in the estimation target image 50 as follows.

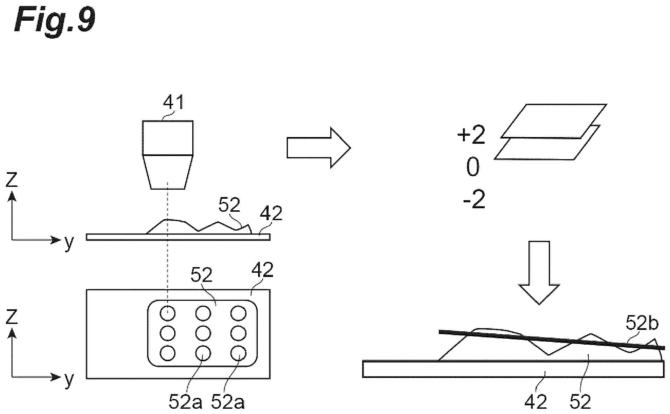

As shown in FIG. 9, the imaging device 40 images the imaging target 52 on a slide glass 42 by using an objective lens 41, for example. Parts indicated by the Z axis and the Y axis in FIG. 9 are the objective lens 41, the slide glass 42, and the imaging target 52 when the imaging direction (Z-axis direction) is viewed from the side (X-axis), and parts indicated by the X-axis and the Y-axis are the slide glass 42 and the imaging target 52 viewed from above in the imaging direction (Z-axis direction).

The imaging device 40 is configured to be able to control the focal position with respect to the imaging target 52 as follows, for example. The imaging device 40 is configured such that the position of the objective lens 41 in the imaging direction, that is, the height of the objective lens 41, is variable. In addition, the imaging device 40 is configured such that the position of a plane (XY plane) perpendicular to the imaging direction (Z-axis direction) is variable. Specifically, the objective lens 41 may be movable, the mounting portion on which the slide glass 42 is mounted may be movable, or both may be possible.

The focal position estimation unit 22 calculates the inclination of the imaging target 52 as described above from the estimated focal position when in focus (for example, +2, which is the difference between the focal position when in focus and the focal position 0 when the estimation target image 50 is captured, shown in FIG. 9) of a position 52a of the imaging target 52 corresponding to the position of each pixel of the focal position map 60 (estimation target image 50). The focal position estimation unit 22 calculates a focus plane 52b of the imaging target 52 from the calculated inclination of the imaging target 52 and the calculated focal position when in focus of each position 52a of the imaging target 52. In addition, the focus plane 52b may be one that does not take the inclination into consideration. For example, the average focal position when in focus of each position 52a of the imaging target 52 may be set as the focus plane 52b.

The focal position estimation unit 22 controls the imaging position (the position in the imaging direction and the XY plane) of the imaging device 40 so that the imaging target 52 is imaged along the focus plane 52b. The controlled imaging device 40 performs imaging by scanning the imaging target 52 and acquires a high-magnification image.

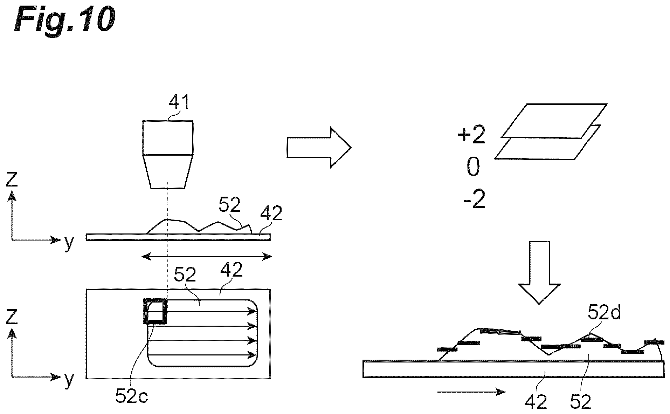

In addition, instead of calculating the focus plane 52b of the entire imaging target 52 as described above, a partial region 52c (for example, a rectangular region shown in FIG. 10) may be set by dividing the region of the imaging target 52, thereby controlling the focal position. In this case, the focal position estimation unit 22 calculates a focus plane 52d for each partial region 52c. The calculation of the focus plane 52d for each partial region 52c may be performed in the same manner as described above, or may be performed using another method. For example, a plane (XY plane) perpendicular to the imaging direction (Z-axis direction) passing through the focal position when in focus of the center of the partial region 52c may be set as the focus plane 52d for the partial region 52c.

The focal position estimation unit 22 controls the imaging position (the position in the imaging direction and the XY plane) of the imaging device 40 so that the imaging target 52 is imaged along the focus plane 52d of each partial region 52c. The controlled imaging device 40 performs imaging by scanning the imaging target 52 and acquires a high-magnification image.

The acquired image may be used in the same manner as in the related art. By using the focal position map 60 estimated when the imaging target 52 is imaged again in this manner, it is possible to easily and quickly acquire an image in which the imaging target 52 is in focus.

The focal position estimation unit 22 may output information indicating an in-focus state according to the position in the estimation target image 50 based on the estimated focal position when in focus according to the position in the estimation target image 50. For example, the focal position estimation unit 22 outputs the following information.

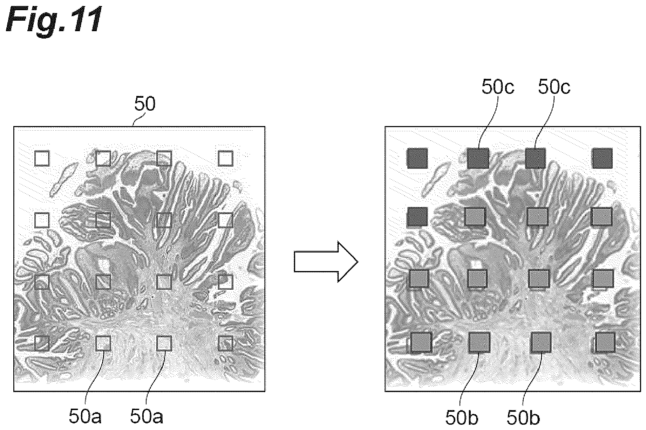

As shown in FIG. 11, a plurality of positions 50a indicating an in-focus state are set in advance in the estimation target image 50. The set positions 50a are, for example, grid-like positions shown in FIG. 11. However, the set positions 50a may be any positions. In addition, the position 50a may be a region (focus determination region) having a predetermined range. The focal position estimation unit 22 determines an in-focus state for each set position 50a by referring to the focal position when in focus of the position 50a indicated by the focal position map 60. The determined in-focus state is, for example, the degree to which the focal position when the estimation target image 50 is captured and the estimated focal position when in focus match each other, that is, the degree to which the estimation target image 50 is in focus at the set position 50a.

For example, the focal position estimation unit 22 calculates a focus score indicating the above degree (for example, the higher the focus score, the higher the above degree) for each position 50a of the estimation target image 50. The focus score of the in-focus state may be determined according to the proportion of the number in which the focal position when in focus matches the focal position when the estimation target image 50 is captured (for example, the number in which the value of the pixel in the focal position map 60 is 0) at the position 50a. For example, the higher the proportion, the higher the focus score. Alternatively, the focus score may be determined according to a value by adding up the weighted values of the pixels in the focal position map 60.

For each position 50a of the estimation target image 50, the focal position estimation unit 22 determines whether or not it is in focus at the position 50a based on the calculated focus score. When the focus score is equal to or greater than a preset threshold value, the focal position estimation unit 22 determines that it is in focus at the position 50a. When the focus score is less than the preset threshold value, the focal position estimation unit 22 determines that it is not in focus at the position 50a.

The focal position estimation unit 22 generates an image in which information indicating the above determination result is superimposed on each set position 50a of the estimation target image 50. For example, as shown in FIG. 11, the estimation target image 50 is generated in which a green rectangle is superimposed on an in-focus position 50b and a red rectangle is superimposed on an out-of-focus position 50c. The focal position estimation unit 22 outputs the generated estimation target image 50 as information indicating the in-focus state. The output may be performed in the same manner as the output of the focal position map 60 described above.

By referring to the in-focus state according to the position in the estimation target image 50 shown as described above, it is possible to easily determine whether or not the image is appropriately acquired. In addition, for the out-of-focus position 50c, imaging may be performed again. In addition, the information indicating the in-focus state according to the position in the estimation target image 50 may be other than the above information. In addition, the information does not need to be superimposed on the estimation target image 50 as described above, and any form may be applied.

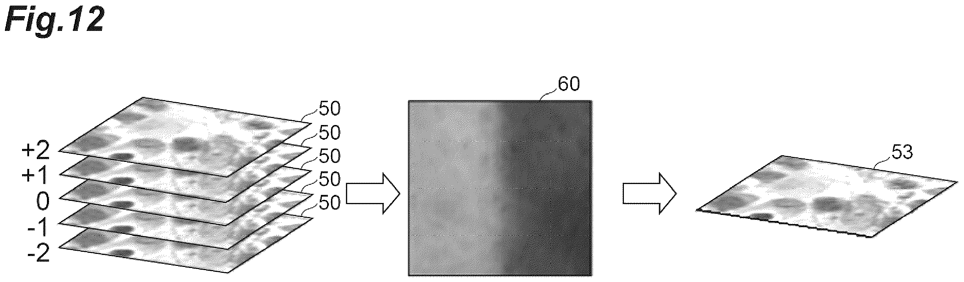

As shown in FIG. 12, one image 53 may be generated from a plurality of estimation target images 50 of the same imaging target at different focal positions. The generated image 53 is an image that is in focus (or close to in-focus) at each position in the image 53.

In this case, the estimation target image acquisition unit 21 acquires a plurality of estimation target images 50 of the same imaging target at different focal positions, as shown in FIG. 12. For example, the plurality of estimation target images 50 are obtained by the imaging device 40 by fixing the position (XY) at the time of imaging of the same imaging target in directions other than the imaging direction (Z-axis direction) and performing consecutive imaging multiple times with different focal positions. At this time, as shown in FIG. 12, the focal position changes at fixed intervals (steps). The interval between the focal positions may be, for example, an interval of one unit in the preset unit described above (the example shown in FIG. 12 also has this interval). In addition, the interval between the focal positions of the plurality of estimation target images 50 does not necessarily have to be a fixed interval (step).

For example, as shown in FIG. 12, a plurality of estimation target images 50 with focal positions of +2, +1, 0, -1, and -2 are acquired. The focal position of 0 described above is a reference focal position set in advance, and the other focal positions indicate shifts from the focal position of 0 in the preset unit described above. The estimation target image acquisition unit 21 acquires information indicating the focal position when each estimation target image 50 is captured (for example, the above information of +2, +1, 0, -1, and -2) together with the plurality of estimation target images 50, and outputs the information and the plurality of estimation target images 50 to the focal position estimation unit 22.

The focal position estimation unit 22 estimates a focal position when in focus according to the position in the estimation target image 50 from at least one estimation target image 50, among the plurality of estimation target images 50 acquired by the estimation target image acquisition unit 21, and generates one image 53 from the plurality of estimation target images 50 based on the estimated focal position.

For example, the focal position estimation unit 22 generates one image 53 from the plurality of estimation target images 50 as follows. The focal position estimation unit 22 receives, from the estimation target image acquisition unit 21, a plurality of estimation target images 50 and information indicating the focal position when each estimation target image 50 is captured. The focal position estimation unit 22 generates the focal position map 60 from the plurality of received estimation target images 50. For example, the focal position estimation unit 22 generates the focal position map 60 from one estimation target image 50, for example, the estimation target image 50 with a focal position of 0.

In the plurality of estimation target images 50 that differ only in focal position, the same focal position map 60 is theoretically generated no matter which estimation target image 50 is used. However, in actual calculation, it is conceivable that the focal position map 60 is slightly different for each of the plurality of estimation target images 50. For this reason, the focal position map 60 may be generated from each of the plurality of estimation target images 50, and the focal position map 60 for use in subsequent processing may be generated by taking the average for each pixel.

Subsequently, the focal position estimation unit 22 extracts, for each pixel of the focal position map 60, the pixel from the estimation target image 50 corresponding to the focal position closest to the focal position when in focus indicated by the focal position map 60. For all pixels, the focal position estimation unit 22 extracts the pixels from any of the plurality of estimation target images 50 as described above. The focal position estimation unit 22 generates one image 53 by combining pixels extracted from any of the plurality of estimation target images 50 while maintaining the pixel positions.

The image 53 that is in focus (or close to in-focus) at each position generated as described above is used in the same manner as in the related art. For example, when the image 53 is used as a virtual microscope image, the image 53 is clear over the entire range. For this reason, there is no need to switch to an in-focus image for each image position, which was conventionally done. As a result, it is possible to reduce the amount of data in realizing a virtual microscope. Up to now, the functions of the focal position estimation system 20 have been described.

As shown in FIG. 1, the model generation system 30 includes a learning image acquisition unit 31, a focus information for learning generation unit 32, and a learning unit 33.

The learning image acquisition unit 31 is learning image acquisition means for acquiring a plurality of learning images of the same imaging target at different focal positions, each of which is associated with a focal position, and in-focus position information indicating focal positions when in focus for the plurality of learning images. The learning images and the focal position information are information used to generate the encoder 70 and the decoder 71. For example, the learning image acquisition unit 31 acquires a plurality of learning images and in-focus position information as follows.

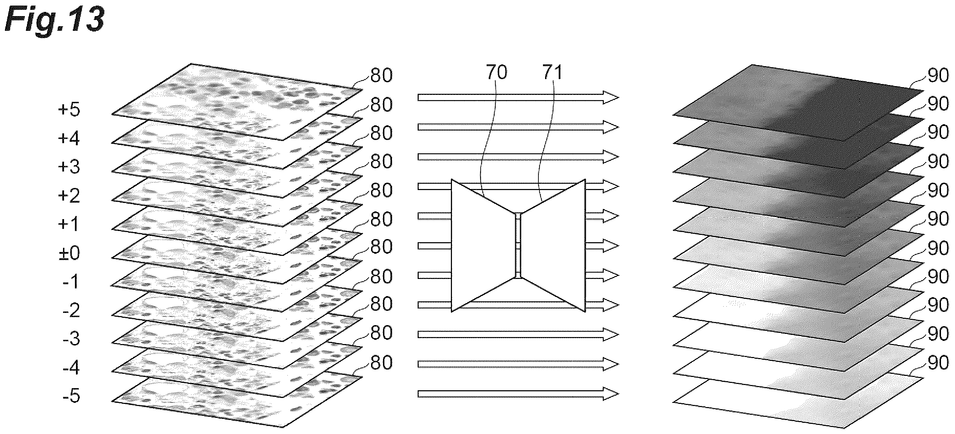

The learning image acquisition unit 31 acquires a plurality of learning images 80 of the same imaging target at different focal positions as shown in FIG. 13. For example, the learning image acquisition unit 31 acquires images captured by the imaging device 40. In the acquired images, an imaging target for the learning image 80 is shown. The imaging target for the learning image 80 may be one that is normally imaged by the imaging device 40, or may be others. The learning image 80 is generated from an image captured by the imaging device 40.

The images that are the basis of the plurality of learning images 80 are obtained by the imaging device 40 by fixing the position (XY) at the time of imaging of the same imaging target in directions other than the imaging direction (Z-axis direction) and performing consecutive imaging multiple times with different focal positions. At this time, the focal position changes at fixed intervals (steps), as in the plurality of learning images 80 shown in FIG. 13. The interval between the focal positions may be, for example, an interval of one unit in the preset unit described above (the example shown in FIG. 13 also has this interval). In addition, the interval between the focal positions of the images that are the basis of the plurality of learning images 80 does not necessarily have to be a fixed interval (step).

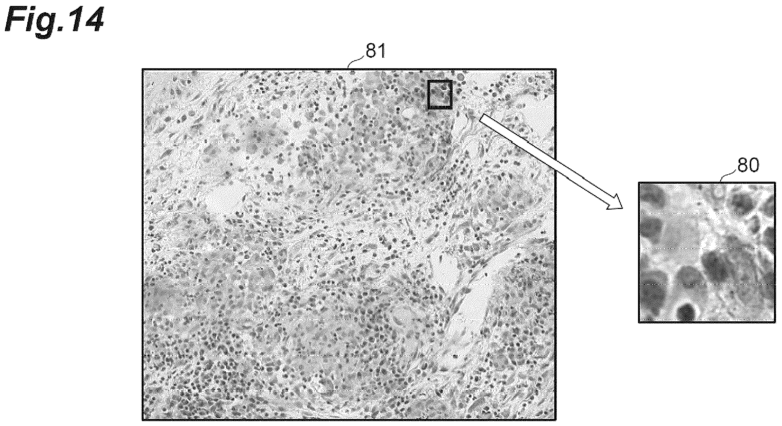

Each learning image 80 corresponds to the estimation target image 50 used for input to the encoder 70. As described above, the estimation target image 50 input to the encoder 70 is not the entire image captured by the imaging device 40 but a part of the image. Therefore, as shown in FIG. 14, the learning image acquisition unit 31 cuts out the learning image 80, which is used for input to the encoder 70 and is a partial image (image patch) having a preset size, from an image 81 captured by the imaging device 40. Cutting out from the image 81 captured by the imaging device 40 is performed on regions at the same position (XY) of each image 81 having a different focal position. The plurality of learning images 80 cut out from the same position (XY) shown in FIG. 13 are used as one set for machine learning training, as will be described below. In the present embodiment, a plurality of images captured at the same position (XY) with different focal positions are called a Z-stack. The learning image acquisition unit 31 acquires a plurality of learning images 80, which are a Z-stack, of which the number is sufficient to appropriately generate the encoder 70 and the decoder 71.

In the image 81 captured by the imaging device 40, the position where the learning image 80 is cut out is a portion in which the imaging target is shown. However, the learning images 80 may include the learning image 80 in which no imaging target is shown. The position where the learning image 80 is cut out in the image 81 captured by the imaging device 40 may be set in advance. In addition, the position where the learning image 80 is cut out may be a position where it is estimated that the imaging target is shown by performing image recognition on the image 81 captured by the imaging device 40. In addition, also when generating one image 53 from the plurality of estimation target images 50 described above, the plurality of estimation target images 50 may be generated by cutting out from the image in the same manner as the plurality of learning images 80.

The learning image acquisition unit 31 acquires information indicating the focal position and in-focus position information for each learning image 80 of the Z-stack. The information indicating the focal position and the in-focus position information are values (values of +5 to -5) indicating the focal position in the preset unit described above, as shown in FIG. 13. These values are associated with each learning image 80 of the Z-stack. Among these values, $\pm 0$ indicates a focal position when in focus, and is associated with the in-focus learning image 80 in the Z-stack. Other values indicate information regarding the direction and distance of the focal position of the in-focus learning image 80 with respect to the focal position at the time of imaging, and are associated with the learning image 80 according to the information. The value is, for example, a value obtained by subtracting the distance corresponding to the position of the imaging target when the estimation target image 50 is captured from the distance corresponding to the position of the imaging target when in focus.

That is, in this case, the value is a value indicating the focal position in a coordinate system in which the focal position when the in-focus learning image 80 is captured is set to 0. If the distance to the imaging target related to the value is longer than the distance to the imaging target when the in-focus learning image 80 is captured, the value is negative. If the distance to the imaging target related to the value is shorter than the distance to the imaging target when the in-focus learning image 80 is captured, the value is positive. The distance to the imaging target when the in-focus learning image 80 is captured refers to a distance from the position of a lens such as an objective lens to the position of the imaging target in a state in which the imaging target captured in the learning image 80 is in focus, and generally corresponds to the focal length of the lens. The focal position when in focus is a position where the imaging target captured in the learning image 80 is in focus.

In order to perform appropriate machine learning training, it is assumed that each learning image 80 of the Z-stack includes the in-focus learning image 80 (the learning image 80 with a focal position of $\pm 0$) in the center as much as possible. That is, the number of learning images 80 corresponding to positive focal positions that are included in each learning image 80 of the Z-stack and the number of learning images 80 corresponding to negative focal positions that are included in each learning image 80 of the Z-stack are made to be approximately the same. In addition, each learning image 80 of the Z-stack does not necessarily include the learning image 80 with a focal position of $\pm 0$.

As described above, in the present embodiment, the fact that the focal position when in focus may differ depending on the position in the image is taken into consideration. However, the in-focus position information associated with the Z-stack is in the unit of the learning image 80, and is not in the unit of the position (pixel) of the learning image 80. It is difficult to specify in advance an appropriate focal position when in focus in the unit of the position (pixel) of the learning image 80. As will be described later, in the present embodiment, the encoder 70 and the decoder 71 that can estimate a focal position when in focus for each position in the image are generated from the in-focus position information in the unit of the learning image 80.

The learning image 80 to which $\pm 0$ is associated in the Z-stack may be specified in advance by using a conventional method of specifying an in-focus image, a conventional method of measuring a focal position when in focus, or the like. For example, a contrast evaluation value (for example, the sum of the absolute values of differences between surrounding pixel values) may be calculated for each learning image 80 of the Z-stack, and the learning image 80 with the highest evaluation value may be set as the learning image 80 associated with $\pm 0$.

The learning image acquisition unit 31 may acquire a value indicating the focal position in a preset unit as information indicating the focal position and in-focus position information by receiving an input from the user or an input from another device. Alternatively, the learning image acquisition unit 31 may store in advance the interval between focal positions between the learning images 80 of the Z-stack and calculate and acquire the value by itself from the stored interval and the learning image 80 itself. The learning image acquisition unit 31 outputs the acquired Z-stack and information indicating the focal position corresponding to the Z-stack to the focus information for learning generation unit 32 and the learning unit 33.

The learning image acquisition unit 31 may acquire a Z-stack and in-focus position information indicating the focal position when in focus for a plurality of learning images corresponding to the Z-stack by using a method other than the above method. In addition, the plurality of learning images and the in-focus position information that are acquired may be any information other than the above as long as these are a plurality of learning images of the same imaging target at different focal positions, each of which is associated with a focal position, and in-focus position information indicating focal positions when in focus for the plurality of learning images. In addition, the information acquisition method is not limited to the above.

The focus information for learning generation unit 32 is focus information for learning generation means for inputting information based on each of the plurality of learning images 80 acquired by the learning image acquisition unit 31 to the focal position estimation model during training, performing a calculation according to the focal position estimation model, acquiring information indicating the focal position when in focus according to the position in each of the plurality of learning images 80, and generating focus information for learning indicating the focal position when in focus according to the position in the image used for machine learning training, for each of the plurality of learning images 80, from the acquired information and in-focus position information. The focus information for learning generation unit 32 may calculate one focal position when in focus, which is common to the plurality of learning images, according to the position in each of the learning images 80 from the focal position when in focus according to the position in each of the plurality of learning images 80 indicated by the information acquired by using the focal position estimation model during training and generate focus information for learning from the one focal position when in focus for each of the plurality of learning images.

For example, the focus information for learning generation unit 32 generates focus information for learning as follows. The focus information for learning is a focal position map for learning (teacher image data) corresponding to each learning image 80. The focal position map for learning is data having a focal position when in focus at a position corresponding to each pixel of the learning image 80. The focal position map for learning is data in the same format as the focal position map 60 generated from the estimation target image 50. However, during the training of machine learning, the focal position when in focus related to the focal position map for learning does not necessarily have to be highly accurate. As shown below, the focal position map for learning is repeatedly generated when generating the encoder 70 and the decoder 71, and the accuracy becomes higher as the machine learning training progresses.

The focus information for learning generation unit 32 receives a Z-stack and information indicating the focal position corresponding to the Z-stack from the learning image acquisition unit 31. In addition, the focus information for learning generation unit 32 receives the encoder 70 and the decoder 71 during training from the learning unit 33. The focus information for learning generation unit 32 inputs information based on each learning image 80 of the Z-stack to the encoder 70 during training, performs a calculation according to the encoder 70 during training, and acquires the feature quantity of the learning image 80 that is an output from the encoder 70 during training. The focus information for learning generation unit 32 inputs the acquired feature quantity to the decoder 71 during training, performs a calculation according to the decoder 71 during training, and acquires a focal position map 90 of the estimation result, which is an output from the decoder 71 during training, as a result of estimating the focal position when in focus according to the position in the learning image 80. FIG. 13 shows an example of each focal position map 90 of estimation results obtained from each learning image 80 of the Z-stack.

As described above, the learning images 80 of the Z-stack are images that differ only in focal position. Therefore, if the accuracy of the encoder 70 and the decoder 71 is sufficient, the focal positions when in focus shown in the acquired focal position maps 90 should be the same position. However, since the accuracy of the encoder 70 and the decoder 71 during training is not sufficient, the focal positions when in focus shown in the acquired focal position maps 90 are usually not the same position. The focus information for learning generation unit 32 generates a focal position map for learning, in which the focal position when in focus is the same position, from each acquired focal position map 90.

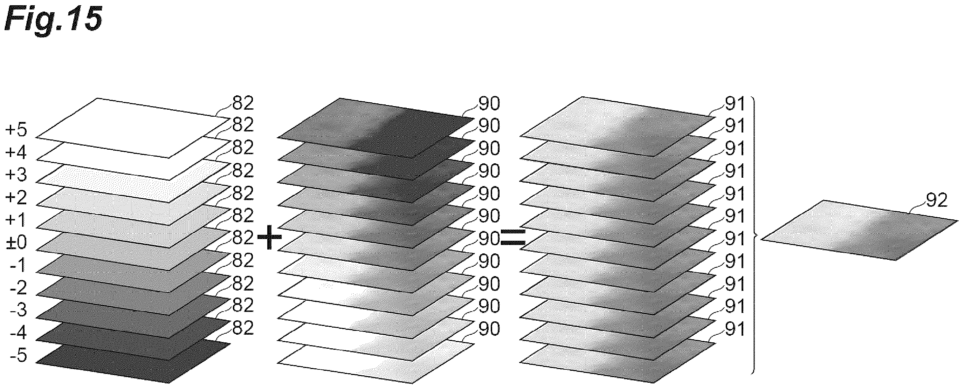

For each learning image 80 of the Z-stack, the focus information for learning generation unit 32 generates a label map (logical coordinate map) 82 shown in FIG. 15 in which all pixel values in images with the same size are set to values (values of +5 to -5) indicating the focal position associated with the learning image 80. The focus information for learning generation unit 32 generates a label collection map 91 for each learning image 80 by adding up the pixel values of the label map 82 and the focal position map 90 of estimation results for each pixel. The focal position map 90 of estimation results is data in a coordinate system for each learning image 80 (a coordinate system based on the focal position when the learning image 80 is captured). However, the label collection map 91 obtained by combining the focal position map 90 and the label map 82 can have the same coordinate system (coordinate system based on the focal position of the learning image 80 of $\pm 0$).

The focus information for learning generation unit 32 calculates an average of pixel values for each pixel of the label collection maps 91, and generates a collection map 92 that takes the pixel value of each pixel as its average. In addition, when generating the collection map 92, outliers of the pixel values of pixels of the label collection map 91 may be eliminated. In addition, when generating the collection map 92, a weighted average may be used instead of a simple average. The weight of the weighted average is set in advance. For example, among the plurality of learning images 80, the weight of the label collection map 91 corresponding to the learning image 80 whose corresponding focal position is close to the focal position when in focus (focal position is $\pm 0$) becomes larger, and the weight of the label collection map 91 corresponding to the learning image 80 whose corresponding focal position is far from the focal position when in focus becomes smaller. The collection map 92 is data indicating the focal position when in focus in the same coordinate system described above estimated from the encoder 70 and the decoder 71 during training, that is, data indicating one focal position when in focus that is common to the plurality of learning images 80 of the Z-stack.

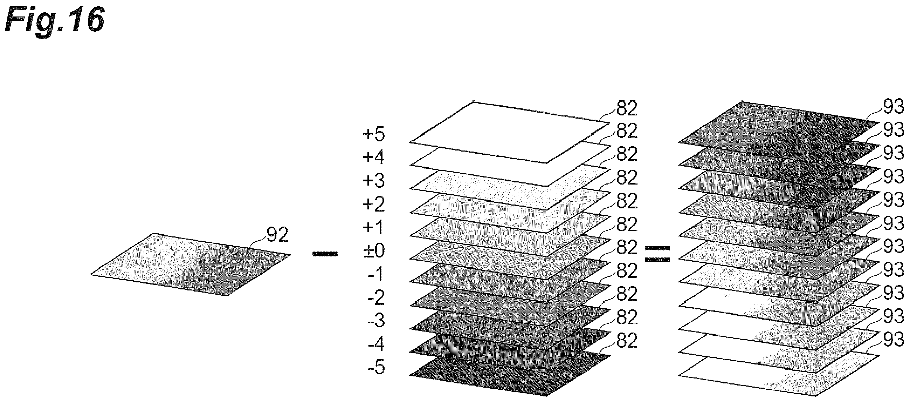

As shown in FIG. 16, the focus information for learning generation unit 32 generates a focal position map for learning 93 from the generated collection map 92 and each label map 82 for each label map 82, that is, for each learning image 80. The focal position map for learning 93 is generated by subtracting the pixel value of the label map 82 from the pixel value of the collection map 92 for each pixel.

The generation of the focal position map for learning 93 is the reverse of the generation of the collection map 92. Since the collection map 92 is calculated as an ensemble from the label collection map 91 estimated from each learning image 80, the accuracy is high due to the ensemble effect. By applying the collection map 92 to each label map 82 as described above, it is possible to generate a highly accurate focal position map for learning 93, that is, the focal position map for learning 93 that can be used to generate more appropriate encoder 70 and decoder 71. In addition, by eliminating outliers and performing weighted averaging when generating the collection map 92 as described above, it is possible to generate a highly accurate focal position map for learning 93.

The focus information for learning generation unit 32 outputs the generated collection map 92 and focal position map for learning 93 to the learning unit 33. In addition, the focus information for learning generated by the focus information for learning generation unit 32 may be any information other than the focal position map for learning 93 as long as the information indicates a focal position when in focus according to the position in the image used for machine learning training, which is generated from calculation results and in-focus position information according to the learning model during training. In addition, the focus information for learning may be generated by a method other than the above.

The learning unit 33 is learning means for performing machine learning training to generate a focal position estimation model by using information based on each of the plurality of learning images 80 acquired by the learning image acquisition unit 31 and focus information for learning corresponding to each of the plurality of learning images generated by the focus information for learning generation unit 32. In addition, the learning unit 33 may generate a feature quantity output model that receives information based on an image as its input and outputs the feature quantity of the image input to the focal position estimation model. The learning unit 33 generates two different feature quantity learning images, which are associated with focal positions and correspond to the plurality of learning images, based on information indicating the focal position when in focus according to the position in each of the plurality of learning images, which is acquired by using the focal position estimation model during training, compares the feature quantities of the two feature quantity learning images with each other according to the focal positions associated with the two feature quantity learning images with the combination of the two feature quantity learning images as one unit, and performs machine learning training based on the comparison result to generate a feature quantity output model. The learning unit 33 may perform machine learning training so that the difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

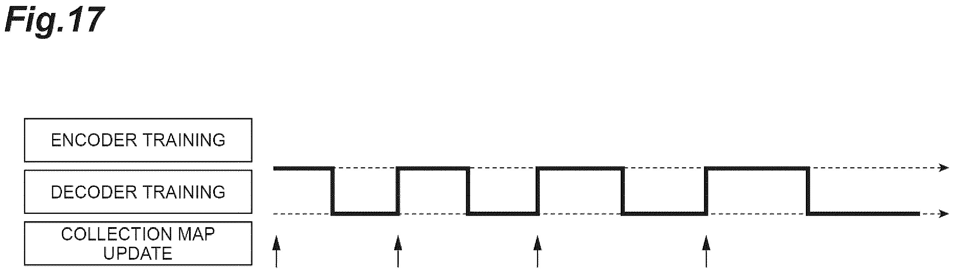

For example, the learning unit 33 generates the decoder 71 that is a focal position estimation model and the encoder 70 that is a feature quantity output model as described below. The training of the encoder 70 and the training of the decoder 71 by the learning unit 33 and the updating (generation) of the collection map 92 and the updating (generation) of the focal position map for learning 93 by the learning unit 33 are repeatedly performed in order as shown in FIG. 17. As shown in FIG. 17, before the training of the encoder 70 and the training of the decoder 71 by the learning unit 33, the updating of the collection map 92 and the updating of the focal position map for learning 93 by the learning unit 33 are performed.

The learning unit 33 receives a Z-stack and information indicating the focal position corresponding to the Z-stack from the learning image acquisition unit 31. The learning unit 33 receives the collection map 92 and the focal position map for learning 93 from the focus information for learning generation unit 32.

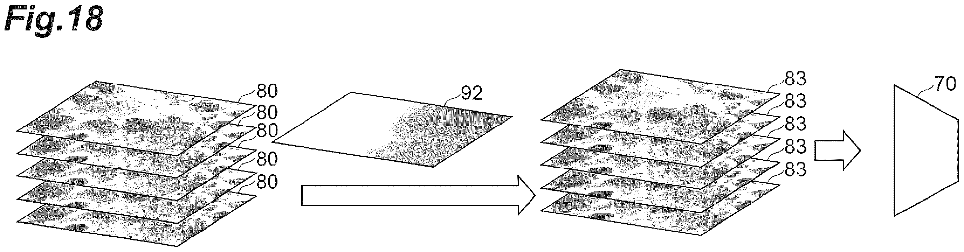

As shown in FIG. 18, the learning unit 33 performs training of the encoder 70 by using each piece of input information. For the training of the encoder 70, the learning unit 33 generates a feature quantity learning image 83 from each learning image 80 of the Z-stack. As described above, in the learning image 80, the shift between the focal position when the learning image 80 is captured and the focal position when in focus may differ for the position in the image, that is, for each pixel. The feature quantity learning image 83 is an image in which (it is assumed that) these deviations are not different for each pixel. That is, the feature quantity learning image 83 is an image in which (it is considered that) the unevenness and inclination of the learning image 80 have been corrected.

The learning unit 33 generates the feature quantity learning image 83 with reference to the collection map 92. For example, the learning unit 33 acquires pixels where the shift between the focal position when the learning image 80 is captured and the focal position when in focus is the same between the pixel positions, from any of the plurality of learning images 80 of the Z-stack, with reference to the collection map 92, and combines (resynthesizes) the pixels to generate the feature quantity learning image 83. In the training of the encoder 70, the shift described above is used as one focal position at the time of imaging for the feature quantity learning image 83. As shown in FIG. 18, the learning unit 33 generates, from one Z-stack, a plurality of feature quantity learning images 83 having different focal positions at the time of imaging. In addition, the feature quantity learning image 83 may be generated by using a method other than the above.

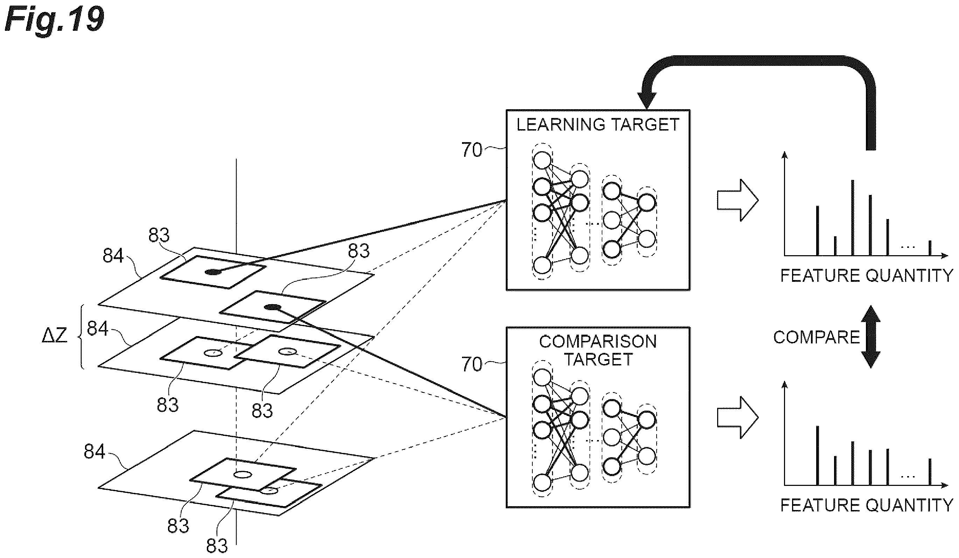

In addition, the learning unit 33 generates the feature quantity learning images 83 from a plurality of Z-stacks. The generated feature quantity learning images 83 include a plurality of feature quantity learning images 83 having the same focal position (shift described above) and a plurality of feature quantity learning images 83 having different focal positions (shifts described above). FIG. 19 shows an image of the generated feature quantity learning image 83. The vertical direction of a portion showing the feature quantity learning image 83 in FIG. 19 is the imaging direction. The feature quantity learning image 83 is considered to be a partial image (image patch) cut out from a plane 84 in which the shift between the focal position when the image is captured and the focal position when in focus is the same at all positions in the image. There are a plurality of planes 84, and the focal position at the time of imaging changes at fixed intervals (steps) ($\Delta Z$).

The focal positions when capturing the feature quantity learning images 83 cut out (or considered to have been cut out) from the same plane 84 are the same, and the focal positions when capturing the feature quantity learning images 83 cut out (or considered to have been cut out) from different planes 84 are different.

The learning unit 33 performs machine learning training of the encoder 70 by using two feature quantity learning images 83 selected from the plurality of generated feature quantity learning images 83 as one set. Sets used for machine learning training include both a set of feature quantity learning images 83 related to the same focal position and a set of feature quantity learning images 83 related to different focal positions. The set of feature quantity learning images 83 may be selected by using a method set in advance to satisfy the conditions described above.

The learning unit 33 performs machine learning training by inputting information based on the selected set of feature quantity learning images 83 to the encoder 70. As shown in FIG. 19, when one set of feature quantity learning images 83 are input to the encoder 70, a feature quantity for each of the feature quantity learning images 83 is obtained as an output. In FIG. 19, the value of each element of the vector, which is a feature quantity, is shown in a bar graph. At this time, the encoder 70 to which one feature quantity learning image 83 is input is set as a learning target, and the encoder 70 to which the other feature quantity learning image 83 is input is set as a comparison target. However, these encoders 70 are the same ones during training.

The learning unit 33 compares two output feature quantities with each other according to the focal position of the feature quantity learning image 83 and performs machine learning training based on the comparison result. When the focal positions of the two feature quantity learning images 83 are the same focal position (that is, when the focal positions of the two feature quantity learning images 83 are on the same plane), the learning unit 33 performs machine learning so that the difference between the feature quantities of the two feature quantity learning images 83 becomes smaller. When the focal positions of the two feature quantity learning images 83 are different focal positions (that is, when the Z positions are different), the learning unit 33 performs machine learning so that the difference between the feature quantities of the two feature quantity learning images 83 becomes larger. In addition, in the case of the two feature quantity learning images 83 cut out (or considered to have been cut out) from the same plane 84, the focal positions of the two feature quantity learning images 83 are the same focal position. In addition, even when the focal positions of the two feature quantity learning images 83 are close enough to be regarded as the same one, the focal positions of the two feature quantity learning images 83 may be regarded as the same focal position.

That is, the correlation between the feature quantities of partial images cut out from the images on the same focal plane becomes larger regardless of the cutout position. On the other hand, the correlation between the feature quantities of partial images cut out from the images on different focal planes becomes smaller. By performing machine learning training in this manner, the feature quantity output from the encoder 70 reflects the feature corresponding to the focal position.

Specifically, when the focal positions of the two feature quantity learning images 83 are the same focal position, the learning unit 33 performs machine learning by using the following loss xy as a loss function.

$$error_i = \left( \frac{F_{ti} - F_{ci}}{SD_i} \right)^2$$

$$loss\_xy = \sqrt{\frac{\sum_{i=0}^{n} error_i}{n + 1}}$$

Here, i (0 to n) is a suffix (subscript) indicating an element of the vector of feature quantities. The number of channels (the number of dimensions) of the vector of feature quantities is n + 1. $F_{t0}$ to $F_{tn}$ are the values of the respective elements of the vector of feature quantities output from the encoder 70 which is the learning target. $F_{c0}$ to $F_{cn}$ are the values of the respective elements of the vector of feature quantities output from the encoder 70 which is the comparison target. $SD_i$ is a standard deviation for the element i of each feature quantity. By calculating $error_i$ by dividing the difference by the standard deviation as described above, variations in the difference for each channel are evened out. Loss is the average (positive square root of the average) of the error for each channel.

When the focal positions of the two feature quantity learning images 83 are different focal positions, the learning unit 33 performs machine learning by using the following loss z as a loss function.

$$loss\_z = \frac{1}{loss\_xy}$$

That is, the loss function in this case is the reciprocal of the loss function when the focal positions of the two feature quantity learning images 83 are the same focal position. The machine learning itself based on the loss function, that is, the updating of the parameters of the encoder 70 may be performed in the same manner as in the related art. In addition, the loss function does not necessarily have to be the one described above, and any loss function may be used as long as the loss function conforms to the criteria described above.

The learning unit 33 generates the encoder 70 by repeating the selection of a set of feature quantity learning images 83 and the machine learning training. For example, the learning unit 33 generates the encoder 70 by performing the above repetition until the generation of the encoder 70 converges based on the preset conditions similarly to the conventional machine learning training or by performing the above repetition a specified number of times set in advance.

The learning unit 33 may generate the encoder 70 by using an existing learned model generated by machine learning. As the existing learned model, a model to which information based on an image is input similarly to the encoder 70 according to the present embodiment is used. That is, an existing learned model having the same input as the encoder 70 according to the present embodiment may be used. The existing learned model is, for example, a model for performing image recognition. Specifically, the existing learned model is ResNet, VGG, Mobile Net, and the like. A part of the existing learned model is used to generate the encoder 70. A layer on the output side of the existing learned model is removed, and a portion up to the intermediate layer of the existing learned model is used to generate the encoder 70. The existing learned model used to generate the encoder 70 may include the entire intermediate layer, or may include only a part of the intermediate layer.

The learning unit 33 receives the above part of the existing learned model, and uses the part as the encoder 70 at the start of machine learning. That is, the learning unit 33 performs fine tuning by using the above part of the existing learned model as an initial parameter of the encoder 70. In addition, one obtained by adding a new output layer to the output side of the above part of the learned model may be used as the encoder 70 at the start of machine learning. In addition, when adding a new output layer, one obtained by adding a new intermediate layer between the output side of the above part of the learned model and the new output layer may be used as the encoder 70 at the start of machine learning.

In addition, the learning unit 33 may generate the encoder 70 without using an existing learned model. For example, a model using random values as initial parameters as in conventional machine learning may be used as the encoder 70 at the start of machine learning.

Using the existing learned model for the generation of the encoder 70 has the following advantages. Learning time can be greatly shortened. It is possible to generate the highly accurate encoder 70, that is, the encoder 70 capable of outputting a more appropriate feature quantity even with a small number of feature quantity learning images 83. The existing learned model described above already has the ability to separate features with a low level of abstraction. Therefore, only learning focusing on features with a high degree of abstraction using the new feature quantity learning image 83 is required.

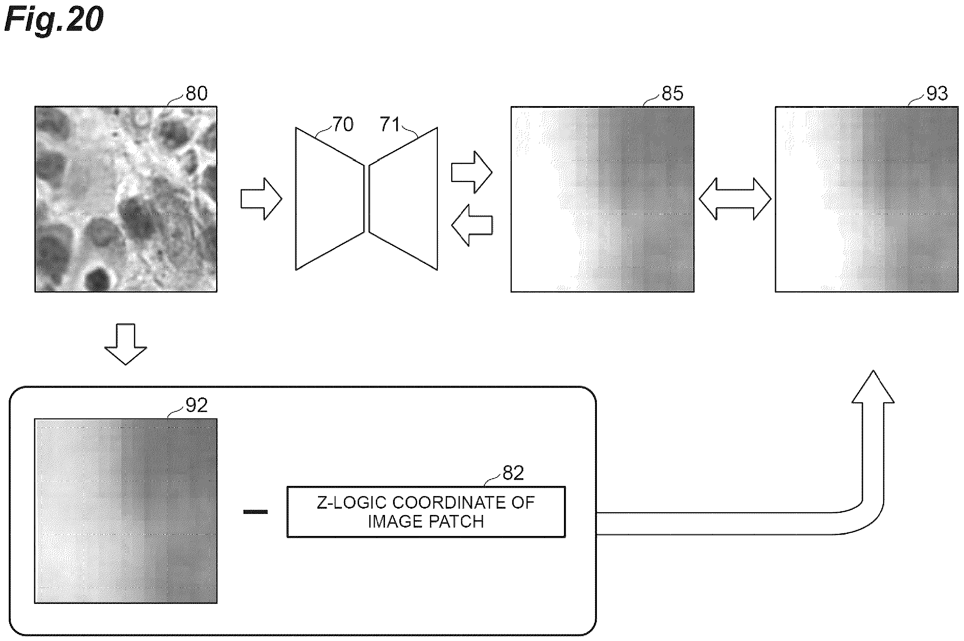

As shown in FIG. 20, the learning unit 33 performs training of the decoder 71 by using each piece of input information. The learning unit 33 inputs information based on the learning image 80 to the encoder 70 after the above-described machine learning training, performs a calculation according to the encoder 70, and acquires the feature quantity of the learning image 80 that is an output from the encoder 70. The learning unit 33 performs machine learning training by using the acquired feature quantity as an input to the decoder 71 and using information based on the focal position map for learning 93 corresponding to the learning image 80 related to the input to the encoder 70 as an output of the focal position estimation model. The information based on the focal position map for learning 93 is information corresponding to the output from the decoder 71. In addition, as described above, the focal position map for learning 93 is generated by subtracting the label map 82 (Z-logic coordinate of the image patch) from the collection map 92.

For example, the input to the encoder 70 during machine learning training is the pixel value of each pixel of the learning image 80. When the decoder 71 outputs the focal position map 60, the output from the decoder 71 during machine learning training is the pixel value of each pixel of the focal position map for learning 93. When the decoder 71 outputs a value of each candidate as described above, the information based on the focal position map for learning 93 is, for example, a value of each candidate (one hot vector for each pixel) with a value of a candidate corresponding to the pixel value of the focal position map for learning 93 for each pixel as 1 and a value of a candidate not corresponding to the pixel value of the focal position map for learning 93 for each pixel as 0. The learning unit 33 generates information based on the focal position map for learning 93 corresponding to the output from the decoder 71, as necessary, before performing machine learning training.

The machine learning training itself, that is, updating of the parameters of the decoder 71 may be performed in the same manner as in the related art. For example, as shown in FIG. 20, the learning unit 33 inputs the feature quantity to the decoder 71, performs a calculation according to the decoder 71, and acquires an output 85 from the decoder 71. The learning unit 33 compares the acquired output 85 with the information based on the focal position map for learning 93 and updates the parameters of the decoder 71 by error backpropagation. In addition, since this machine learning training is training only for the decoder 71, the parameters of the encoder 70 are not updated in this machine learning training.

The learning unit 33 generates the decoder 71 by repeating the processing of the machine learning training until the generation of the decoder 71 converges based on the preset conditions or by repeating the processing of the machine learning training a specified number of times set in advance.

After the training of the encoder 70 and the decoder 71, the learning unit 33 determines whether or not to end the training of the encoder 70 and the decoder 71. For example, when the training of the encoder 70 and the training of the decoder 71 by the learning unit 33 shown in FIG. 17 and the updating (generation) of the collection map 92 and the updating (generation) of the focal position map for learning 93 have been performed a specified number of times set in advance, the learning unit 33 determines that the training of the encoder 70 and the decoder 71 is to be ended. Alternatively, the learning unit 33 may determine that the training of the encoder 70 and the decoder 71 is to be ended based on criteria other than those described above.

When it is determined that the training of the encoder 70 and the decoder 71 is to be ended, the learning unit 33 sets the encoder 70 and the decoder 71 at that point in time as the final encoder 70 and decoder 71 generated by the model generation system 30. The learning unit 33 outputs the encoder 70 and the decoder 71 generated through training to the focal position estimation system 20. In addition, the generated encoder 70 and decoder 71 may be used for purposes other than those in the present embodiment. In this case, for example, the learning unit 33 transmits or outputs the encoder 70 and the decoder 71 to other devices or modules that use the encoder 70 and the decoder 71. Alternatively, the learning unit 33 may cause the computer 10 or other devices to store the generated encoder 70 and decoder 71 so that these can be used by other devices or modules that use the encoder 70 and the decoder 71.

When it is determined that the training of the encoder 70 and the decoder 71 is not to be ended, the learning unit 33 outputs the encoder 70 and the decoder 71 during training to the focus information for learning generation unit 32. The focus information for learning generation unit 32 receives the encoder 70 and the decoder 71 during training. The focus information for learning generation unit 32 generates the collection map 92 and the focal position map for learning 93 again by using the input encoder 70 and decoder 71 during training, and outputs the collection map 92 and the focal position map for learning 93 to the learning unit 33.

The learning unit 33 receives the collection map 92 and the focal position map for learning 93 again from the focus information for learning generation unit 32. The learning unit 33 performs the training of the encoder 70 and the decoder 71 again in the same manner as described above by using the collection map 92 and the focal position map for learning 93, and determines whether or not to end the training of the encoder 70 and the decoder 71. The processing after the determination is also the same as described above. Up to now, the functions of the model generation system 30 have been described.

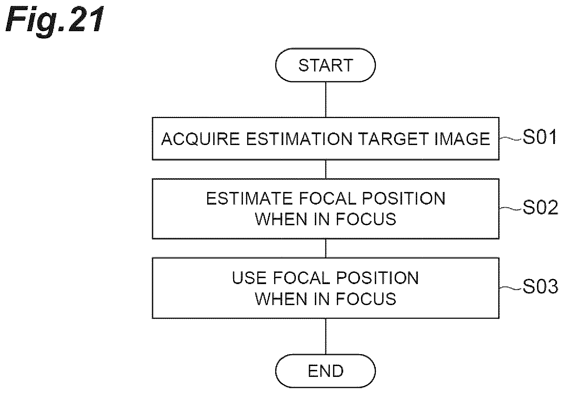

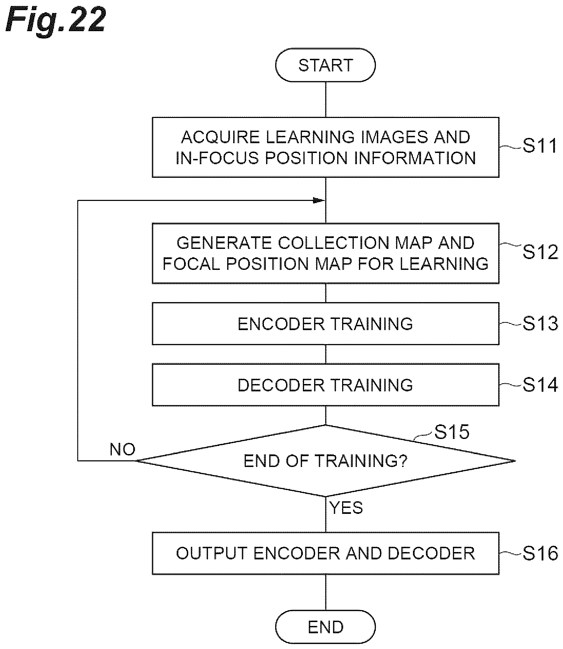

Subsequently, a process executed by the computer 10 according to the present embodiment (operation method executed by the computer 10) will be described with reference to flowcharts of FIGS. 21 and 22. First, a focal position estimation method that is a process performed when estimating the focal position when in focus corresponding to the estimation target image 50, that is, a process performed by the focal position estimation system 20 according to the present embodiment, will be described with reference to the flowchart of FIG. 21.

In this process, first, the estimation target image acquisition unit 21 acquires the estimation target image 50 (S01, estimation target image acquisition step). The estimation target image 50 is based on, for example, an image obtained by imaging using the imaging device 40. Then, by using the encoder 70 and the decoder 71, the focal position estimation unit 22 estimates, from the estimation target image 50, a focal position when in focus corresponding to the estimation target image 50 and according to the position in the estimation target image 50 (S02, focal position estimation step). For example, the focal position when in focus is estimated for each pixel of the estimation target image 50.

The estimated focal position when in focus is used by the focal position estimation unit 22 (S03, focal position estimation step). For example, the estimated focal position when in focus is used for the above-described estimation of the inclination of the imaging target captured in the estimation target image 50, control of the focal position when imaging the imaging target captured in the estimation target image 50, output of the information indicating the in-focus state according to the position in the estimation target image 50, or generation of one image from a plurality of estimation target images 50. In addition, information indicating the estimated focal position when in focus may be output from the focal position estimation unit 22. Up to now, the focal position estimation method, which is a process performed by the focal position estimation system 20 according to the present embodiment, has been described.

Next, a model generation method, which is a process performed when generating the encoder 70 and the decoder 71, that is, a process performed by the model generation system 30 according to the present embodiment, will be described with reference to the flowchart of FIG. 22.

In this process, first, the learning image acquisition unit 31 acquires a plurality of learning images 80 of the same imaging target at different focal positions, each of which is associated with a focal position, and in-focus position information indicating focal positions when in focus for the plurality of learning images 80 (S11, learning image acquisition step). Then, the focus information for learning generation unit 32 generates the collection map 92 and the focal position map for learning 93 by using the encoder 70 and the decoder 71 during training (S12, focus information for learning generation step).

Then, the learning unit 33 trains the encoder 70 based on the learning image 80 and the collection map 92 (S13, learning step). Then, the learning unit 33 trains the decoder 71 based on the learning image 80 and the focal position map for learning 93 (S14, learning step). Then, the learning unit 33 determines whether or not to end the training of the encoder 70 and the decoder 71 (S15, learning step).

When it is determined that the training of the encoder 70 and the decoder 71 is to be ended (YES in S15), the generated encoder 70 and decoder 71 are output from the learning unit 33 (S16). The generated encoder 70 and decoder 71 are used, for example, in the focal position estimation system 20.

When it is determined that the training of the encoder 70 and the decoder 71 is not to be ended (NO in S15), the focus information for learning generation unit 32 and the learning unit 33 perform the above processing (S12 to S15) again by using the encoder 70 and the decoder 71 during training at the point in time. Up to now, the model generation method, which is a process performed by the model generation system 30 according to the present embodiment, has been described.

In the present embodiment, the focal position when in focus according to the position in the estimation target image 50 is estimated by using the decoder 71 that outputs information indicating the focal position when in focus according to the position in the image. Therefore, according to the present embodiment, an image-based estimation of the focal position can be performed according to the position of the image.

In addition, as in the present embodiment, the decoder 71 generated by the model generation system 30 may be used to estimate the focal position when in focus. Therefore, it is possible to appropriately and reliably estimate the focal position based on the image. However, the focal position estimation model used for estimation may be a model that is generated through machine learning training and that receives information based on an image as its input and outputs information indicating a focal position when in focus according to a position in the image, and does not necessarily have to be the decoder 71 generated by the model generation system 30.

In addition, as in the present embodiment, in addition to the decoder 71, the encoder 70 generated by the model generation system 30 may be used to estimate the focal position when in focus. According to this configuration, the feature quantity of the estimation target image 50 is acquired by using the encoder 70, and the focal position when in focus according to the position in the estimation target image 50 is estimated from the feature quantity. By performing an estimation using the feature quantity, it is possible to more appropriately and reliably estimate the focal position based on the image. However, the encoder 70 may not be used to estimate the focal position when in focus. In this case, it is assumed that the decoder 71 receives information based on the estimation target image 50, not the feature quantity output from the encoder 70.

In addition, as in the present embodiment, the information indicating the estimated focal position when in focus may be used to estimate the inclination of the imaging target captured in the estimation target image 50. According to this configuration, it is possible to appropriately estimate the inclination of the imaging target captured in the estimation target image 50.

In addition, as in the present embodiment, the information indicating the estimated focal position when in focus may be used to control the focal position when imaging the imaging target captured in the estimation target image 50. According to this configuration, it is possible to appropriately image the imaging target. For example, it is possible to acquire an image that is in focus at all positions.

In addition, as in the present embodiment, the information indicating the estimated focal position when in focus may be used to output information indicating an in-focus state according to the position in the estimation target image 50. According to this configuration, it is possible to understand the in-focus state according to the position in the estimation target image 50. For example, it is possible to understand a position that is in focus and a position that is out of focus in the estimation target image 50.

In addition, as in the present embodiment, the information indicating the estimated focal position when in focus may be used to generate one image from the plurality of estimation target images 50. According to this configuration, it is possible to acquire an appropriate image. For example, it is possible to acquire an images that is in focus at all positions. However, the information indicating the estimated focal position when in focus does not need to be used as described above, and may be used for any purpose. In addition, the information indicating the estimated focal position when in focus does not need to be used by the focal position estimation system 20, and may be used by other devices or modules.

In addition, in the present embodiment, the focal position map for learning 93, which is focus information for learning, is generated, and machine learning training is performed to generate the decoder 71. With the decoder 71 generated in this manner, an image-based estimation of the focal position can be performed according to the position of the image. In addition, in the generation of the decoder 71 according to the present embodiment, the decoder 71 can be generated without requiring in advance the focal position when in focus for each position in the learning image 80, for example, for each pixel of the learning image 80. Therefore, the decoder 71 can be easily generated.

In addition, as in the present embodiment, one collection map 92 common to the plurality of learning images 80 may be calculated from the focal position map 90 of the estimation result of each of the plurality of learning images 80 obtained by using the decoder 71 during training, and the focal position map for learning 93 may be generated from the collection map 92 for each of the plurality of learning images 80. According to this configuration, since the focal position map for learning 93 used for training can be made more appropriate, the decoder 71 capable of more appropriately and reliably estimating the focal position is generated. However, the generation of the focal position map for learning 93 may be performed based on the information acquired by the learning image acquisition unit 31, and may be performed by using a method other than the above.

In addition, as in the present embodiment, in addition to the decoder 71, the encoder 70 may be generated. According to this configuration, by performing an estimation using the feature quantity output from the encoder 70, it is possible to more appropriately and reliably estimate the focal position based on the image. In addition, as in the present embodiment, by performing training using the feature quantity learning image 83 generated based on the learning image 80 and the collection map 92, it is possible to obtain the encoder 70 that outputs more appropriate feature quantities.

In addition, by generating the feature quantity learning image 83 and using the feature quantity learning image 83 for training, it is possible to minimize the above-described mixture of feature quantities. By reducing the mixture of feature quantities, highly accurate machine learning training becomes possible.

In addition, as in the present embodiment, the machine learning training may be performed so that the difference between the feature quantities of the two feature quantity learning images 83 becomes smaller when the two feature quantity learning images 83 are related to the same focal position and the difference between the feature quantities of the two feature quantity learning images 83 becomes larger when the two feature quantity learning images 83 are related to different focal positions. According to this configuration, the feature quantity output from the encoder 70 can be made more appropriate. As a result, it is possible to more appropriately and reliably estimate the focal position based on the image. However, the machine learning training does not necessarily have to be performed as described above, as long as it is performed based on the result of comparing the feature quantities of the two feature quantity learning images 83. In addition, the generation of the encoder 70 itself does not necessarily have to be performed. In this case, the decoder 71 to be generated may be generated so as to receive information based on the estimation target image 50, not the feature quantity output from the encoder 70.

In addition, although the computer 10 includes the focal position estimation system 20 and the model generation system 30 in the present embodiment, the focal position estimation system 20 and the model generation system 30 may be implemented independently.

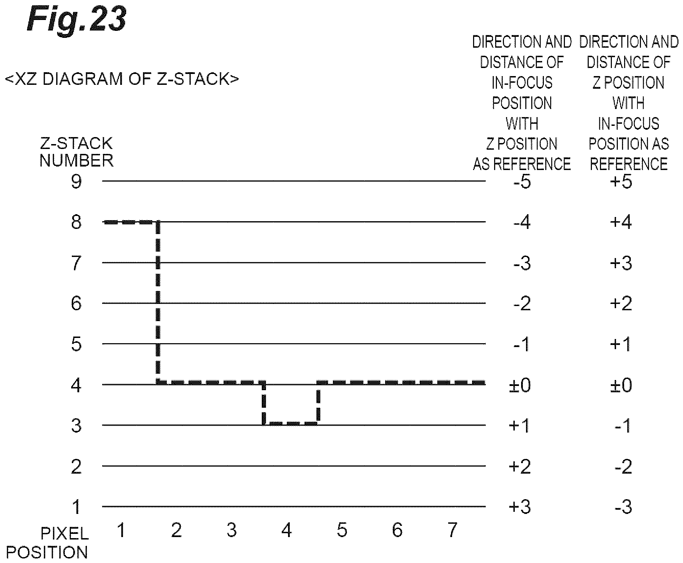

Subsequently, a specific example of estimating the focal position when in focus according to the present embodiment will be described. FIG. 23 shows a focal position when in focus for each pixel position when the focal position when in focus is estimated for the estimation target image 50 of the Z-stack. In FIG. 23, the horizontal axis indicates the position of a pixel in the estimation target image 50, and the vertical axis indicates the focal position of the Z-stack. The thick broken line in the diagram indicates an estimated focal position when in focus.

In the example shown in FIG. 23, there are nine Z-stacks. Assuming that Z-stack number 4 is the focal position when in focus, the range of the Z position of the Z-stack with the Z-stack number 4 as a reference is -3 to +5 (the same applies to pixel positions 2, 3, 5, 6, and 7). However, the focal position when in focus of pixel 1 is the position of Z-stack number 8, and the range of the Z position of the Z-stack with the Z-stack number 8 as a reference is -7 to +1. Similarly, the focal position when in focus of pixel 4 is the position of Z-stack number 3, and the range of the Z position of the Z-stack with the Z-stack number 3 as a reference is -2 to +6. Looking at the range of the distance farthest from the focal position when in focus, the range of the Z position extends -7 to +6. Therefore, it can be seen that it is possible to handle information wider than the original range (-3 to +5) of the Z position of the Z-stack.

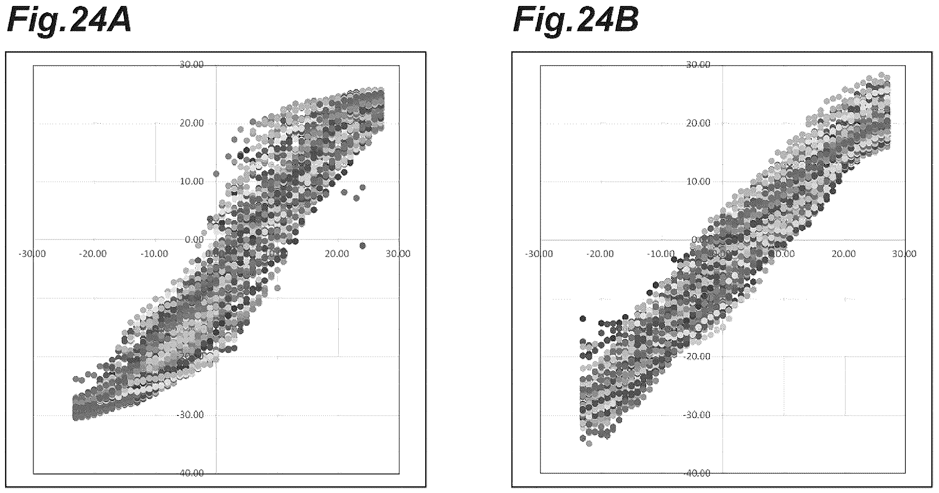

FIGS. 24A and 24B show graphs of a focal position (Z-stack position) of the estimation target image 50 and a focal position when in focus estimated from the estimation target image 50. The horizontal axis indicates the focal position of the estimation target image 50, and the vertical axis indicates the focal position when in focus estimated from the estimation target image 50. One point in each graph corresponds to one pixel of the estimation target image 50. In addition, all points in one graph correspond to pixels of the same estimation target image 50. The points in each graph correspond to 128 × 128 positions (pixels) extracted from positions in a 10 × 10 grid in each estimation target image 50.

The graph in FIG. 24A is a graph when estimation is performed by using a decoder that is trained to use a focal position map for learning as a uniform value for all pixels without using the collection map 92, unlike in the present embodiment. The graph in FIG. 24B is a graph when the estimation according to the present embodiment is performed.

In an ideal graph, points on the graph form a band with a predetermined width. The graph of FIG. 24B according to the present embodiment is closer to the ideal graph than the graph of FIG. 24A. In particular, the difference at the end position of the Z-stack is large.

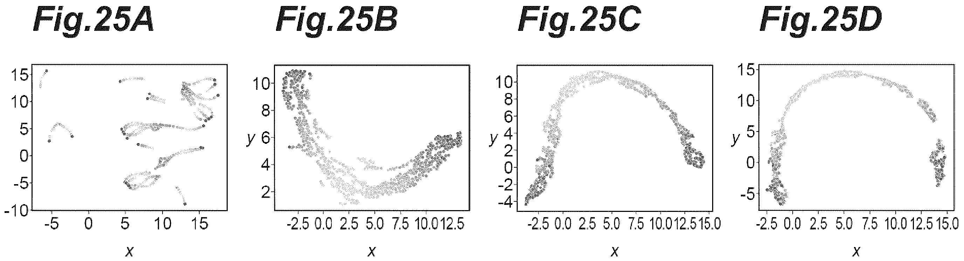

In the present embodiment, the reason why some of the shortcut paths for high resolution are not used as in general SegNet and U-Net will be explained. FIGS. 25A to 25D show examples in which the feature quantities output from each block of the encoder 70 are displayed in a two-dimensional manner by using uniform manifold approximation and projection (UMAP). In addition, XY in the diagram is a two-dimensional UMAP, and cannot be compared by data dependency. FIG. 25A is a display of 128 channels in the sixth layer of the encoder 70. FIG. 25B is a display of 256 channels in the ninth layer of the encoder 70. FIG. 25C is a display of 512 channels in the 12th layer of the encoder 70. FIG. 25D is a display of 1024 channels in the 15th layer of the encoder 70.

The number of Z-stacks is 51. The displayed densities correspond to Z-stack numbers 1 to 51. For each image, $128 \times 128$ feature quantities extracted from positions in a $5 \times 5$ grid are estimated. That is, there are 25 points with the same density, resulting in a 51-level gradation.

In the feature quantity of the sixth layer, since structural information indicating the structure of the imaging target captured in the image remains, there are many places where the feature quantities expressed with the same density are far apart from each other. In the ninth, twelfth, and fifteenth layers, the structural information is reduced, and the feature quantities become information in the Z-axis direction (imaging direction). Therefore, the feature quantities at different positions in the same image expressed with the same density are close to each other and lined up in the Z-axis direction.

In other words, by connecting the feature quantities of the ninth and subsequent layers with a shortcut path, Z position information obtained by two-dimensional decoding can be made more accurate in the spatial direction as well. In addition, the number of layers in which structural information disappears varies depending on the magnification of the target optical system, the resolution of the image, and the like.

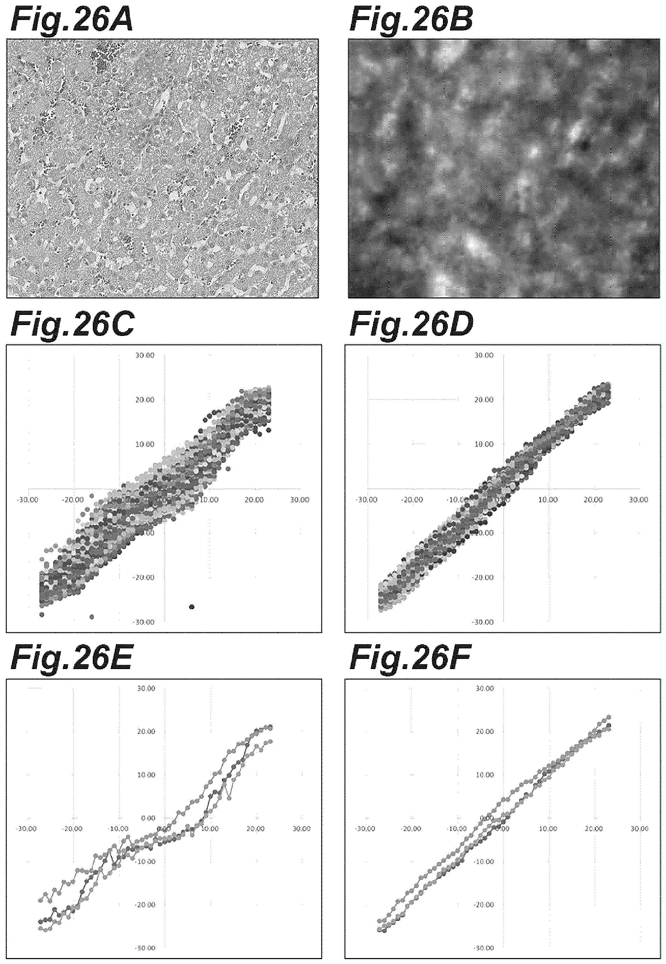

FIGS. 26A to 26F show examples of a case where performing estimation using the target image 50 obtained by cutting out from different position in the image from which the learning image 80 has been cut out. FIG. 26A is the estimation target image 50 in this example. FIG. 26B is the focal position map 60 estimated from the estimation target image 50.

The graphs in FIGS. 26C and 26E are graphs when one focal position when in focus is estimated from one image, not for each position in the image, for example, not for each pixel, unlike in the present embodiment.

The graphs in FIGS. 26D and 26F are graphs when estimation according to the present embodiment is performed. The points in the graphs of FIGS. 26C and 26D correspond to images extracted from positions in a $10 \times 10$ grid in the estimation target image 50. The points in the graphs of FIGS. 26E and 26F correspond to three locations (the same location) near the center of the estimation target image 50. The graphs in FIGS. 26C to 26F are similar to the graphs in FIGS. 24A and 24B.

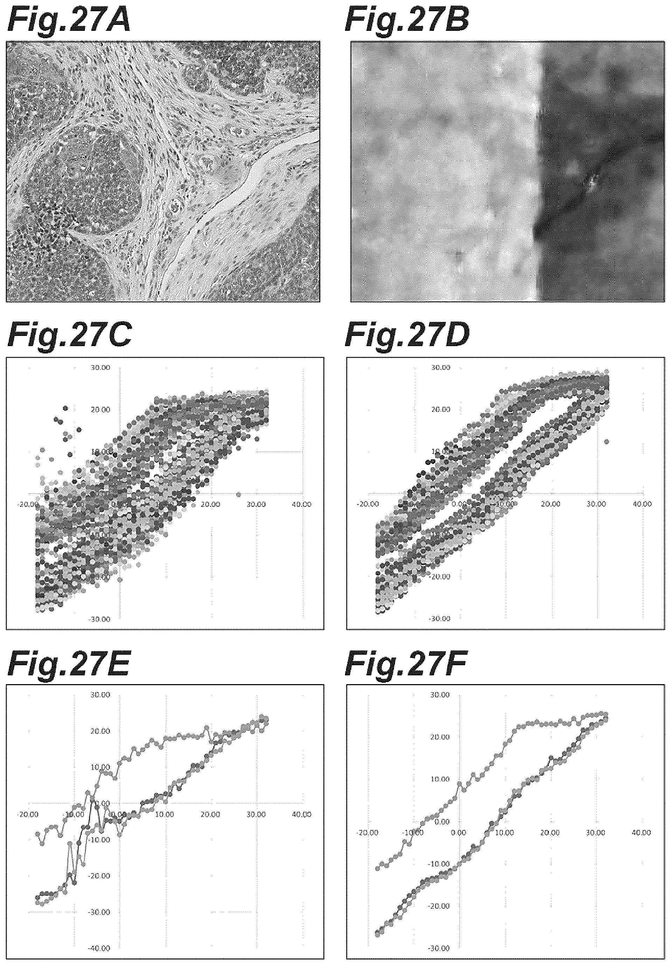

FIGS. 27A to 27F show examples of a case where performing estimation using the target image 50 obtained by cutting out from different position in the image from which the learning image 80 has been cut out. FIG. 27A is the estimation target image 50 in this example. FIG. 27B is the focal position map 60 estimated from the estimation target image 50.

The graphs in FIGS. 27C and 27E are graphs when one focal position when in focus is estimated from one image, not for each position in the image, for example, not for each pixel, unlike in the present embodiment. The graphs in FIGS. 27D and 27F are graphs when estimation according to the present embodiment is performed. The points in the graphs of FIGS. 27C and 27D correspond to images extracted from positions in a $10 \times 10$ grid in the estimation target image 50. The points in the graphs of FIGS. 27E and 27F correspond to three locations (the same location) near the center of the estimation target image 50. The graphs in FIGS. 27C to 27F are similar to the graphs in FIGS. 24A and 24B.

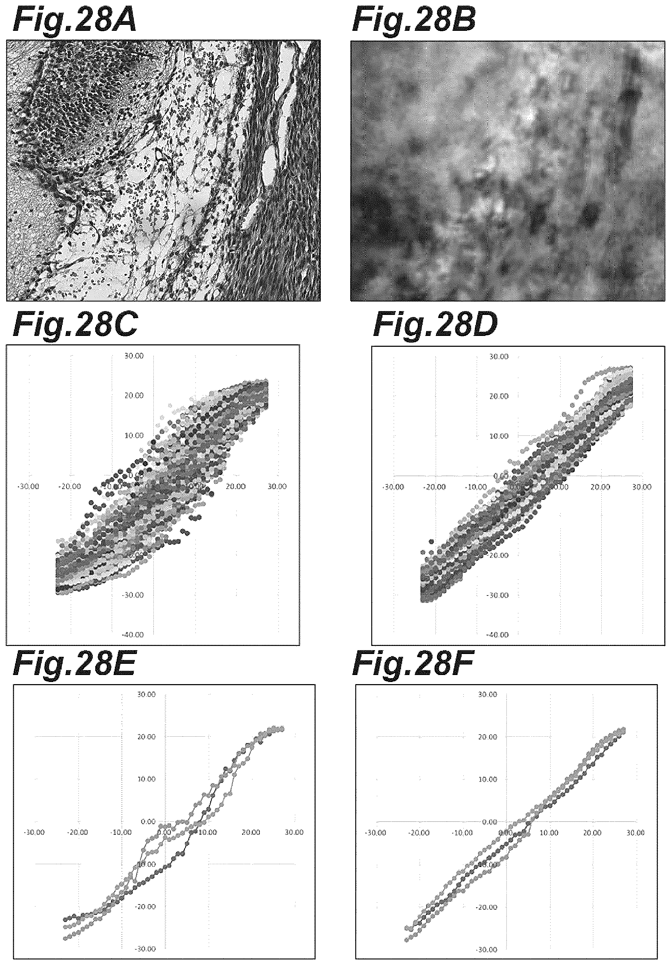

FIGS. 28A to 28F show examples of a case where performing estimation using the target image 50 obtained by cutting out from different position in the image from which the learning image 80 has been cut out. FIG. 28A is the estimation target image 50 in this example. FIG. 28B is the focal position map 60 estimated from the estimation target image 50.

The graphs in FIGS. 28C and 28E are graphs when one focal position when in focus is estimated from one image, not for each position in the image, for example, not for each pixel, unlike in the present embodiment. The graphs in FIGS. 28D and 28F are graphs when estimation according to the present embodiment is performed. The points in the graphs of FIGS. 28C and 28D correspond to images extracted from positions in a $10 \times 10$ grid in the estimation target image 50. The points in the graphs of FIGS. 28E and 28F correspond to three locations (the same location) near the center of the estimation target image 50. The graphs in FIGS. 28C to 28F are similar to the graphs in FIGS. 24A and 24B.

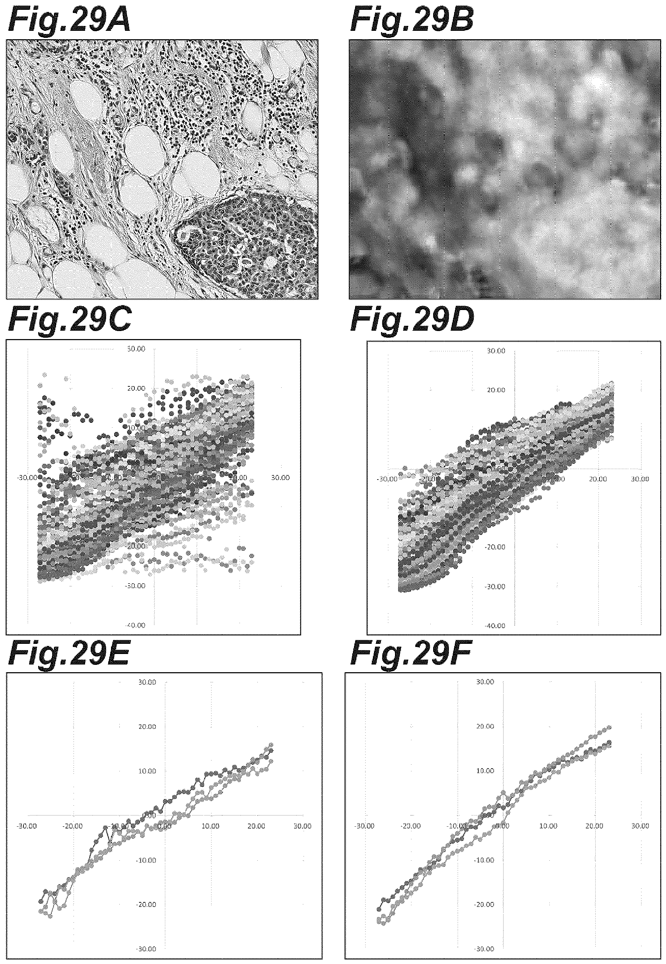

FIGS. 29A to 29F show examples of a case where estimation is performed by using the estimation target image 50 captured separately from the learning image 80. FIG. 29A is the estimation target image 50 in this example. FIG. 29B is the focal position map 60 estimated from the estimation target image 50.

The graphs in FIGS. 29C and 29E are graphs when one focal position when in focus is estimated from one image, not for each position in the image, for example, not for each pixel, unlike in the present embodiment. The graphs in FIGS. 29D and 29F are graphs when estimation according to the present embodiment is performed. The points in the graphs of FIGS. 29C and 29D correspond to images extracted from positions in a 10 × 10 grid in the estimation target image 50. The points in the graphs of FIGS. 29E and 29F correspond to three locations (the same location) near the center of the estimation target image 50. The graphs in FIGS. 29C to 29F are similar to the graphs in FIGS. 24A and 24B.

As shown in FIGS. 26A to 29F, the estimation according to the present embodiment can be performed appropriately according to the position in the image.

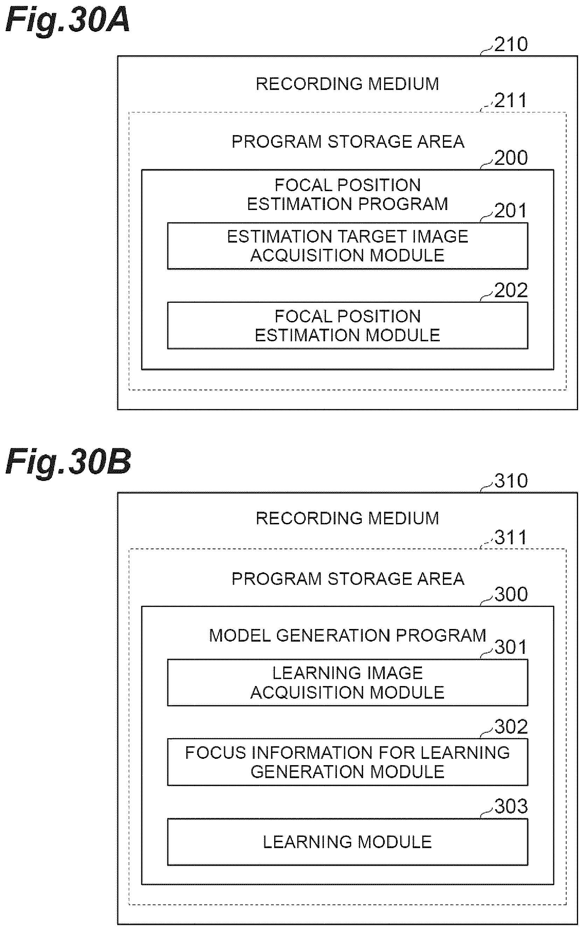

Subsequently, a focal position estimation program and a model generation program for causing the focal position estimation system 20 and the model generation system 30 to perform the above-described series of processes will be described. As shown in FIG. 30A, a focal position estimation program 200 is stored in a program storage area 211 formed in a computer-readable recording medium 210 which is inserted into a computer or which is provided in the computer. The recording medium 210 may be a non-transitory recording medium.

The focal position estimation program 200 includes an estimation target image acquisition module 201 and a focal position estimation module 202. The functions realized by executing the estimation target image acquisition module 201 and the focal position estimation module 202 are the same as the functions of the estimation target image acquisition unit 21 and the focal position estimation unit 22 of the focal position estimation system 20 described above.

As shown in FIG. 30B, a model generation program 300 is stored in a program storage area 311 formed in a computer-readable recording medium 310 which is inserted into a computer or which is provided in the computer. The recording medium 310 may be a non-transitory recording medium. In addition, when the focal position estimation program 200 and the model generation program 300 are executed on the same computer, the recording medium 310 may be the same as the recording medium 210.

The model generation program 300 includes a learning image acquisition module 301, a focus information for learning generation module 302, and a learning module 303. The functions realized by executing the learning image acquisition module 301, the focus information for learning generation module 302, and the learning module 303 are the same as the functions of the learning image acquisition unit 31, the focus information for learning generation unit 32, and the learning unit 33 of the model generation system 30 described above.

In addition, a part or entirety of each of the focal position estimation program 200 and the model generation program 300 may be transmitted through a transmission medium, such as a communication line, and received by another device and recorded (including installation). In addition, each module of the focal position estimation program 200 and the model generation program 300 may be installed in any of a plurality of computers instead of one computer. In this case, the above-described series of processes are performed by a computer system including the plurality of computers.

The focal position estimation method, the focal position estimation program, the focal position estimation system, the model generation method, the model generation program, the model generation system, and the focal position estimation model of the present disclosure have the following configurations.

[1] A focal position estimation method for estimating a focal position when in focus corresponding to an estimation target image, the method including: an estimation target image acquisition step for acquiring an estimation target image; and a focal position estimation step for estimating a focal position when in focus corresponding to the estimation target image and according to a position in the estimation target image, from the estimation target image acquired in the estimation target image acquisition step, by using a focal position estimation model that is generated through machine learning training and that receives information based on an image as its input and outputs information indicating a focal position when in focus according to a position in the image.

[2] The focal position estimation method according to [1], in which the focal position estimation model is generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

[3] The focal position estimation method according to [2], in which the focal position estimation model is generated, in the focus information for learning generation step, by calculating one focal position when in focus, which is common to the plurality of learning images, according to a position in each learning image from the focal position when in focus according to a position in each of the plurality of learning images indicated by the information acquired by using the focal position estimation model during training and generating the focus information for learning from the one focal position when in focus for each of the plurality of learning images.

[4] The focal position estimation method according to [2] or [3], in which, in the focal position estimation step, a feature quantity of the estimation target image is acquired from the estimation target image acquired in the estimation target image acquisition step by using a feature quantity output model that receives information based on an image as its input and outputs a feature quantity of the image input to the focal position estimation model, and the focal position when in focus corresponding to the estimation target image and according to a position in the estimation target image is estimated from the feature quantity by using the focal position estimation model, and the feature quantity output model is generated, in the learning step, by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

[5] The focal position estimation method according to [4], in which the feature quantity output model is generated, in the learning step, by performing the machine learning training so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

[6] The focal position estimation method according to any one of [1] to [5], in which, in the focal position estimation step, an inclination of an imaging target captured in the estimation target image is estimated from the estimated focal position when in focus according to a position in the estimation target image.

[7] The focal position estimation method according to any one of [1] to [6], in which, in the focal position estimation step, a focal position when imaging an imaging target captured in the estimation target image is controlled based on the estimated focal position when in focus according to a position in the estimation target image.

[8] The focal position estimation method according to any one of [1] to [7], in which, in the focal position estimation step, information indicating an in-focus state according to a position in the estimation target image is output based on the estimated focal position when in focus according to a position in the estimation target image.

[9] The focal position estimation method according to any one of [1] to [8], in which, in the estimation target image acquisition step, a plurality of estimation target images of the same imaging target at different focal positions are acquired, and in the focal position estimation step, a focal position when in focus according to a position in the estimation target image is estimated from at least one estimation target image among the plurality of estimation target images acquired in the estimation target image acquisition step, and one image is generated from the plurality of estimation target images based on the estimated focal position.

[10] A focal position estimation program causing a computer to function as a focal position estimation system for estimating a focal position when in focus corresponding to an estimation target image, the program causing the computer to function as: estimation target image acquisition means for acquiring an estimation target image; and focal position estimation means for estimating a focal position when in focus corresponding to the estimation target image and according to a position in the estimation target image, from the estimation target image acquired by the estimation target image acquisition means, by using a focal position estimation model that is generated through machine learning training and that receives information based on an image as its input and outputs information indicating a focal position when in focus according to a position in the image.

[11] The focal position estimation program according to [10], in which the focal position estimation model is generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

[11-2] The focal position estimation program according to [11], in which the focal position estimation model is generated, in the focus information for learning generation step, by calculating one focal position when in focus, which is common to the plurality of learning images, according to a position in each learning image from the focal position when in focus according to a position in each of the plurality of learning images indicated by the information acquired by using the focal position estimation model during training and generating the focus information for learning from the one focal position when in focus for each of the plurality of learning images.

[11-3] The focal position estimation program according to [11] or [11-2], in which the focal position estimation means acquires a feature quantity of the estimation target image from the estimation target image acquired by the estimation target image acquisition means by using a feature quantity output model that receives information based on an image as its input and outputs a feature quantity of the image input to the focal position estimation model and estimates the focal position when in focus corresponding to the estimation target image and according to a position in the estimation target image from the feature quantity by using the focal position estimation model, and the feature quantity output model is generated, in the learning step, by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

[11-4] The focal position estimation program according to [11-3], in which the feature quantity output model is generated, in the learning step, by performing the machine learning training so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

[11-5] The focal position estimation program according to any one of [10] to [11-4], in which the focal position estimation means estimates an inclination of an imaging target captured in the estimation target image from the estimated focal position when in focus according to a position in the estimation target image.

[11-6] The focal position estimation program according to any one of [10] to [11-5], in which the focal position estimation means controls a focal position when imaging an imaging target captured in the estimation target image based on the estimated focal position when in focus according to a position in the estimation target image.

[11-7] The focal position estimation program according to any one of [10] to [11-6], in which the focal position estimation means outputs information indicating an in-focus state according to a position in the estimation target image based on the estimated focal position when in focus according to a position in the estimation target image.

[11-8] The focal position estimation program according to any one of [10] to [11-7], in which the estimation target image acquisition means acquires a plurality of estimation target images of the same imaging target at different focal positions, and the focal position estimation means estimates a focal position when in focus according to a position in the estimation target image from at least one estimation target image among the plurality of estimation target images acquired by the estimation target image acquisition means and generates one image from the plurality of estimation target images based on the estimated focal position.

[12] A focal position estimation system for estimating a focal position when in focus corresponding to an estimation target image, the system including: estimation target image acquisition means for acquiring an estimation target image; and focal position estimation means for estimating a focal position when in focus corresponding to the estimation target image and according to a position in the estimation target image, from the estimation target image acquired by the estimation target image acquisition means, by using a focal position estimation model that is generated through machine learning training and that receives information based on an image as its input and outputs information indicating a focal position when in focus according to a position in the image.

[13] The focal position estimation system according to [12], in which the focal position estimation model is generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

[13-2] The focal position estimation system according to [13], in which the focal position estimation model is generated, in the focus information for learning generation step, by calculating one focal position when in focus, which is common to the plurality of learning images, according to a position in each learning image from the focal position when in focus according to a position in each of the plurality of learning images indicated by the information acquired by using the focal position estimation model during training and generating the focus information for learning from the one focal position when in focus for each of the plurality of learning images.

[13-3] The focal position estimation system according to [13] or [13-2], in which the focal position estimation means acquires a feature quantity of the estimation target image from the estimation target image acquired by the estimation target image acquisition means by using a feature quantity output model that receives information based on an image as its input and outputs a feature quantity of the image input to the focal position estimation model and estimates the focal position when in focus corresponding to the estimation target image and according to a position in the estimation target image from the feature quantity by using the focal position estimation model, and the feature quantity output model is generated, in the learning step, by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

[13-4] The focal position estimation system according to [13-3], in which the feature quantity output model is generated, in the learning step, by performing the machine learning training so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

[13-5] The focal position estimation system according to any one of [12] to [13-4], in which the focal position estimation means estimates an inclination of an imaging target captured in the estimation target image from the estimated focal position when in focus according to a position in the estimation target image.

[13-6] The focal position estimation system according to any one of [12] to [13-5], in which the focal position estimation means controls a focal position when imaging an imaging target captured in the estimation target image based on the estimated focal position when in focus according to a position in the estimation target image.

[13-7] The focal position estimation system according to any one of [12] to [13-6], in which the focal position estimation means outputs information indicating an in-focus state according to a position in the estimation target image based on the estimated focal position when in focus according to a position in the estimation target image.

[13-8] The focal position estimation system according to any one of [12] to [13-7], in which the estimation target image acquisition means acquires a plurality of estimation target images of the same imaging target at different focal positions, and the focal position estimation means estimates a focal position when in focus according to a position in the estimation target image from at least one estimation target image among the plurality of estimation target images acquired by the estimation target image acquisition means and generates one image from the plurality of estimation target images based on the estimated focal position.

[14] A model generation method for generating a focal position estimation model that receives information based on an image as its input and outputs information indicating a focal position when in focus according to a position in the image, the method including: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

[15] The model generation method according to [14], in which, in the focus information for learning generation step, one focal position when in focus, which is common to the plurality of learning images, according to a position in each learning image is calculated from the focal position when in focus according to a position in each of the plurality of learning images indicated by the information acquired by using the focal position estimation model during training, and the focus information for learning is generated from the one focal position when in focus for each of the plurality of learning images.

[16] The model generation method according to [14] or [15], in which, in the learning step, a feature quantity output model that receives information based on an image as its input and outputs a feature quantity of the image input to the focal position estimation model is generated, and, in the learning step, the feature quantity output model is generated by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

[17] The model generation method according to [16], in which, in the learning step, the machine learning training is performed so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

[18] A model generation program causing a computer to function as a model generation system for generating a focal position estimation model that receives information based on an image as its input and outputs information indicating a focal position when in focus according to a position in the image, the program causing the computer to function as: learning image acquisition means for acquiring a plurality of learning images of the same imaging target at different focal positions, each of which is associated with a focal position, and in-focus position information indicating focal positions when in focus for the plurality of learning images; focus information for learning generation means for inputting information based on each of the plurality of learning images acquired by the learning image acquisition means to the focal position estimation model during training, performing a calculation according to the focal position estimation model to acquire information indicating a focal position when in focus according to a position in each of the plurality of learning images, and generating focus information for learning indicating a focal position when in focus according to a position in an image used for machine learning training, from the acquired information and the in-focus position information, for each of the plurality of learning images; and learning means for performing machine learning training for generating the focal position estimation model by using the information based on each of the plurality of learning images acquired by the learning image acquisition means and the focus information for learning corresponding to each of the plurality of learning images generated by the focus information for learning generation means.

[18-2] The model generation program according to [18], in which the focus information for learning generation means calculates one focal position when in focus, which is common to the plurality of learning images, according to a position in each learning image from the focal position when in focus according to a position in each of the plurality of learning images indicated by the information acquired by using the focal position estimation model during training and generates the focus information for learning from the one focal position when in focus for each of the plurality of learning images.

[18-3] The model generation program according to [18] or [18-2], in which the learning means generates a feature quantity output model that receives information based on an image as its input and outputs a feature quantity of the image input to the focal position estimation model, and the learning means generates the feature quantity output model by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

[18-4] The model generation program according to [18-3], in which the learning means performs the machine learning training so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

[19] A model generation system for generating a focal position estimation model that receives information based on an image as its input and outputs information indicating a focal position when in focus according to a position in the image, the system including: learning image acquisition means for acquiring a plurality of learning images of the same imaging target at different focal positions, each of which is associated with a focal position, and in-focus position information indicating focal positions when in focus for the plurality of learning images; focus information for learning generation means for inputting information based on each of the plurality of learning images acquired by the learning image acquisition means to the focal position estimation model during training, performing a calculation according to the focal position estimation model to acquire information indicating a focal position when in focus according to a position in each of the plurality of learning images, and generating focus information for learning indicating a focal position when in focus according to a position in an image used for machine learning training, from the acquired information and the in-focus position information, for each of the plurality of learning images; and learning means for performing machine learning training for generating the focal position estimation model by using the information based on each of the plurality of learning images acquired by the learning image acquisition means and the focus information for learning corresponding to each of the plurality of learning images generated by the focus information for learning generation means.

[19-2] The model generation system according to [19], in which the focus information for learning generation means calculates one focal position when in focus, which is common to the plurality of learning images, according to a position in each learning image from the focal position when in focus according to a position in each of the plurality of learning images indicated by the information acquired by using the focal position estimation model during training and generates the focus information for learning from the one focal position when in focus for each of the plurality of learning images.

[19-3] The model generation system according to [19] or [19-2], in which the learning means generates a feature quantity output model that receives information based on an image as its input and outputs a feature quantity of the image input to the focal position estimation model, and the learning means generates the feature quantity output model by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

[19-4] The model generation system according to [19-3], in which the learning means performs the machine learning training so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

[20] A focal position estimation model that is generated through machine learning training and that causes a computer to function to receive information based on an image as its input and output information indicating a focal position when in focus according to a position in the image.

[21] The focal position estimation model according to [20], in which the focal position estimation model is generated by: a learning image acquisition step for acquiring a plurality of learning images of the same imaging target at different focal positions, each of which is associated with a focal position, and in-focus position information indicating focal positions when in focus for the plurality of learning images; a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

[21-2] The focal position estimation model according to [21], in which, in the focus information for learning generation step, one focal position when in focus, which is common to the plurality of learning images, according to a position in each learning image is calculated from the focal position when in focus according to a position in each of the plurality of learning images indicated by the information acquired by using the focal position estimation model during training, and the focus information for learning is generated from the one focal position when in focus for each of the plurality of learning images.

**Claims**

1. A focal position estimation method for estimating a focal position when in focus corresponding to an estimation target image, the method comprising:

    an estimation target image acquisition step for acquiring an estimation target image; and
a focal position estimation step for estimating a focal position when in focus corresponding to the estimation target image and according to a position in the estimation target image, from the estimation target image acquired in the estimation target image acquisition step, by using a focal position estimation model that is generated through machine learning training and that receives information based on an image as its input and outputs information indicating a focal position when in focus according to a position in the image.

2. The focal position estimation method according to claim 1,
wherein the focal position estimation model is generated by:

    a learning image acquisition step for acquiring a plurality of learning images of the same imaging target at different focal positions, each of which is associated with a focal position, and in-focus position information indicating focal positions when in focus for the plurality of learning images;
    a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and
    a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

3. The focal position estimation method according to claim 2,
wherein the focal position estimation model is generated, in the focus information for learning generation step, by calculating one focal position when in focus, which is common to the plurality of learning images, according to a position in each learning image from the focal position when in focus according to a position in each of the plurality of learning images indicated by the information acquired by using the focal position estimation model during training and generating the focus information for learning from the one focal position when in focus for each of the plurality of learning images.

4. The focal position estimation method according to claim 2 or 3,

wherein, in the focal position estimation step, a feature quantity of the estimation target image is acquired from the estimation target image acquired in the estimation target image acquisition step by using a feature quantity output model that receives information based on an image as its input and outputs a feature quantity of the image input to the focal position estimation model, and the focal position when in focus corresponding to the estimation target image and according to a position in the estimation target image is estimated from the feature quantity by using the focal position estimation model, and the feature quantity output model is generated, in the learning step, by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

5. The focal position estimation method according to claim 4,
wherein the feature quantity output model is generated, in the learning step, by performing the machine learning training so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

6. The focal position estimation method according to claim 1 or 2,
wherein, in the focal position estimation step, an inclination of an imaging target captured in the estimation target image is estimated from the estimated focal position when in focus according to a position in the estimation target image.

7. The focal position estimation method according to claim 1 or 2,
wherein, in the focal position estimation step, a focal position when imaging an imaging target captured in the estimation target image is controlled based on the estimated focal position when in focus according to a position in the estimation target image.

8. The focal position estimation method according to claim 1 or 2,
wherein, in the focal position estimation step, information indicating an in-focus state according to a position in the estimation target image is output based on the estimated focal position when in focus according to a position in the estimation target image.

9. The focal position estimation method according to claim 1 or 2,

wherein, in the estimation target image acquisition step, a plurality of estimation target images of the same imaging target at different focal positions are acquired, and
in the focal position estimation step, a focal position when in focus according to a position in the estimation target image is estimated from at least one estimation target image among the plurality of estimation target images acquired in the estimation target image acquisition step, and one image is generated from the plurality of estimation target images based on the estimated focal position.

10. A focal position estimation program causing a computer to function as a focal position estimation system for estimating a focal position when in focus corresponding to an estimation target image, the program causing the computer to function as:

estimation target image acquisition means for acquiring an estimation target image; and
focal position estimation means for estimating a focal position when in focus corresponding to the estimation target image and according to a position in the estimation target image, from the estimation target image acquired by the estimation target image acquisition means, by using a focal position estimation model that is generated through machine learning training and that receives information based on an image as its input and outputs information indicating a focal position when in focus according to a position in the image.

**11.** The focal position estimation program according to claim 10,
wherein the focal position estimation model is generated by:

a learning image acquisition step for acquiring a plurality of learning images of the same imaging target at different focal positions, each of which is associated with a focal position, and in-focus position information indicating focal positions when in focus for the plurality of learning images;
a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and
a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

**12.** A focal position estimation system for estimating a focal position when in focus corresponding to an estimation target image, the system comprising:

estimation target image acquisition means for acquiring an estimation target image; and
focal position estimation means for estimating a focal position when in focus corresponding to the estimation target image and according to a position in the estimation target image, from the estimation target image acquired by the estimation target image acquisition means, by using a focal position estimation model that is generated through machine learning training and that receives information based on an image as its input and outputs information indicating a focal position when in focus according to a position in the image.

**13.** The focal position estimation system according to claim 12,

wherein the focal position estimation model is generated by:

a learning image acquisition step for acquiring a plurality of learning images of the same imaging target at different focal positions, each of which is associated with a focal position, and in-focus position information indicating focal positions when in focus for the plurality of learning images;
a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and
a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

**14.** A model generation method for generating a focal position estimation model that receives information based on an image as its input and outputs information indicating a focal position when in focus according to a position in the image, the method comprising:

a learning image acquisition step for acquiring a plurality of learning images of the same imaging target at different focal positions, each of which is associated with a focal position, and in-focus position information indicating focal positions when in focus for the plurality of learning images;
a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and

a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

15. The model generation method according to claim 14, wherein, in the focus information for learning generation step, one focal position when in focus, which is common to the plurality of learning images, according to a position in each learning image is calculated from the focal position when in focus according to a position in each of the plurality of learning images indicated by the information acquired by using the focal position estimation model during training, and the focus information for learning is generated from the one focal position when in focus for each of the plurality of learning images.

16. The model generation method according to claim 14 or 15,

wherein, in the learning step, a feature quantity output model that receives information based on an image as its input and outputs a feature quantity of the image input to the focal position estimation model is generated, and

in the learning step, the feature quantity output model is generated by generating two different feature quantity learning images, which are associated with focal positions and correspond to the plurality of learning images, based on information indicating the focal position when in focus according to a position in each of the plurality of learning images, which is acquired by using the focal position estimation model during the training, comparing feature quantities of the two feature quantity learning images with each other according to focal positions associated with the two feature quantity learning images with a combination of the two feature quantity learning images as one unit, and performing machine learning training based on a result of the comparison.

17. The model generation method according to claim 16, wherein, in the learning step, the machine learning training is performed so that a difference between the feature quantities of the two feature quantity learning images becomes smaller when the two feature quantity learning images are related to the same focal position and the difference between the feature quantities of the two feature quantity learning images becomes larger when the two feature quantity learning images are related to different focal positions.

18. A model generation program causing a computer to function as a model generation system for generating a focal position estimation model that receives information based on an image as its input and outputs information indicating a focal position when in focus according to a position in the image, the program causing the computer to function as:

learning image acquisition means for acquiring a plurality of learning images of the same imaging target at different focal positions, each of which is associated with a focal position, and in-focus position information indicating focal positions when in focus for the plurality of learning images;

focus information for learning generation means for inputting information based on each of the plurality of learning images acquired by the learning image acquisition means to the focal position estimation model during training, performing a calculation according to the focal position estimation model to acquire information indicating a focal position when in focus according to a position in each of the plurality of learning images, and generating focus information for learning indicating a focal position when in focus according to a position in an image used for machine learning training, from the acquired information and the in-focus position information, for each of the plurality of learning images; and

learning means for performing machine learning training for generating the focal position estimation model by using the information based on each of the plurality of learning images acquired by the learning image acquisition means and the focus information for learning corresponding to each of the plurality of learning images generated by the focus information for learning generation means.

19. A model generation system for generating a focal position estimation model that receives information based on an image as its input and outputs information indicating a focal position when in focus according to a position in the image, the system comprising:

learning image acquisition means for acquiring a plurality of learning images of the same imaging target at different focal positions, each of which is associated with a focal position, and in-focus position information indicating focal positions when in focus for the plurality of learning images;

focus information for learning generation means for inputting information based on each of the plurality of learning images acquired by the learning image acquisition means to the focal position estimation model during training, performing a calculation according to the focal position estimation model to acquire information indicating a focal position when in focus according to a position in each of the plurality of learning images, and generating focus information for learning indicating a focal position when in focus according to a position in an image used for machine learning training, from the acquired information and the in-focus position information, for each of the plurality of learning images; and learning means for performing machine learning training for generating the focal position estimation model by using the information based on each of the plurality of learning images acquired by the learning image acquisition means and the focus information for learning corresponding to each of the plurality of learning images generated by the focus information for learning generation means.

20. A focal position estimation model that is generated through machine learning training and that causes a computer to function to receive information based on an image as its input and output information indicating a focal position when in focus according to a position in the image.

21. The focal position estimation model according to claim 20,
wherein the focal position estimation model is generated by:

a learning image acquisition step for acquiring a plurality of learning images of the same imaging target at different focal positions, each of which is associated with a focal position, and in-focus position information indicating focal positions when in focus for the plurality of learning images;
a focus information for learning generation step in which information based on each of the plurality of learning images acquired in the learning image acquisition step is input to the focal position estimation model during training, a calculation is performed according to the focal position estimation model to acquire information indicating a focal position when in focus according to a position in each of the plurality of learning images, and focus information for learning indicating a focal position when in focus according to a position in an image used for machine learning training is generated from the acquired information and the in-focus position information for each of the plurality of learning images; and
a learning step in which machine learning training for generating the focal position estimation model is performed by using the information based on each of the plurality of learning images acquired in the learning image acquisition step and the focus information for learning corresponding to each of the plurality of learning images generated in the focus information for learning generation step.

# Fig.1

COMPUTER 10

## FOCAL POSITION ESTIMATION SYSTEM 20

### ESTIMATION TARGET IMAGE ACQUISITION UNIT 21

### FOCAL POSITION ESTIMATION UNIT 22

## MODEL GENERATION SYSTEM 30

### LEARNING IMAGE ACQUISITION UNIT 31

### FOCUS INFORMATION FOR LEARNING GENERATION UNIT 32

### LEARNING UNIT 33

IMAGING DEVICE 40

*Fig.2*

Fig.3

EP 4 408 007 A1

## Fig.4A

+3.0  +2.0  0

52

Z
→X

## Fig.4B

+3.0  +2.0  0

52

Z
→X

# Fig.5

# Fig.6

$$\begin{bmatrix} -2 & \cdots & 0 \\ \vdots & \ddots & \vdots \\ -2 & \cdots & 0 \end{bmatrix} \begin{bmatrix} 0 & \cdots & 1 \\ \vdots & \ddots & \vdots \\ 0 & \cdots & 1 \end{bmatrix} \begin{bmatrix} 1 & \cdots & 2 \\ \vdots & \ddots & \vdots \\ 1 & \cdots & 2 \end{bmatrix}$$

*Fig.7*

Fig.8

## Fig.9

Fig.10

Fig.11

## Fig.12

Fig.13

Fig.14

Fig.15

+5
+4
+3
+2
+1
±0
−1
−2
−3
−4
−5

82
82
82
82
82
82
82
82
82
82
82

90
90
90
90
90
90
90
90
90
90
90

91
91
91
91
91
91
91
91
91
91
91

92

+

=

Fig.16

Fig.17

Fig.18

Fig.19

Fig.20

# Fig.21

```
            ┌─────────┐
            │  START  │
            └────┬────┘
                 │
   ┌─────────────────────────────────┐
   │ ACQUIRE ESTIMATION TARGET IMAGE │──S01
   └─────────────────┬───────────────┘
                     │
   ┌─────────────────────────────────┐
   │      ESTIMATE FOCAL POSITION     │──S02
   │         WHEN IN FOCUS            │
   └─────────────────┬───────────────┘
                     │
   ┌─────────────────────────────────┐
   │        USE FOCAL POSITION        │──S03
   │         WHEN IN FOCUS            │
   └─────────────────┬───────────────┘
                     │
               ┌─────────┐
               │   END   │
               └─────────┘
```

# Fig.22

```
              ┌─────────────┐
              │    START    │
              └──────┬──────┘
                     │
       ┌─────────────────────────────┐
       │  ACQUIRE LEARNING IMAGES AND │ ~S11
       │  IN-FOCUS POSITION INFORMATION│
       └─────────────┬───────────────┘
                     │
       ┌─────────────────────────────┐
       │  GENERATE COLLECTION MAP AND │ ~S12
       │  FOCAL POSITION MAP FOR LEARNING│
       └─────────────┬───────────────┘
                     │
       ┌─────────────────────────────┐
       │       ENCODER TRAINING       │ ~S13
       └─────────────┬───────────────┘
                     │
       ┌─────────────────────────────┐
       │       DECODER TRAINING       │ ~S14
       └─────────────┬───────────────┘
                     │
              ╱──────────────╲         S15
        NO   ╱  END OF TRAINING? ╲
       ◄────╲                    ╱
             ╲──────────────────╱
                     │ YES
       ┌─────────────────────────────┐
       │  OUTPUT ENCODER AND DECODER  │ ~S16
       └─────────────┬───────────────┘
                     │
              ┌─────────────┐
              │     END     │
              └─────────────┘
```

# Fig.23

<XZ DIAGRAM OF Z-STACK>

# Fig.24A

# Fig.24B

EP 4 408 007 A1

Fig.25A  Fig.25B  Fig.25C  Fig.25D

## Fig.26A

## Fig.26B

## Fig.26C

## Fig.26D

## Fig.26E

## Fig.26F

## Fig.27A

## Fig.27B

## Fig.27C

## Fig.27D

## Fig.27E

## Fig.27F

## Fig.28A

## Fig.28B

## Fig.28C

## Fig.28D

## Fig.28E

## Fig.28F

*Fig.29A*

*Fig.29B*

*Fig.29C*

*Fig.29D*

*Fig.29E*

*Fig.29F*

## Fig.30A

RECORDING MEDIUM /210

PROGRAM STORAGE AREA /211

FOCAL POSITION
ESTIMATION PROGRAM /200

ESTIMATION TARGET IMAGE
ACQUISITION MODULE /201

FOCAL POSITION
ESTIMATION MODULE /202

## Fig.30B

RECORDING MEDIUM /310

PROGRAM STORAGE AREA /311

MODEL GENERATION PROGRAM /300

LEARNING IMAGE
ACQUISITION MODULE /301

FOCUS INFORMATION FOR LEARNING
GENERATION MODULE /302

LEARNING MODULE /303

Europäisches Patentamt

European Patent Office

Office européen des brevets

# EUROPEAN SEARCH REPORT

**Application Number**

EP 24 15 0316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 205013 B1 (HAMAMATSU PHOTONICS KK [JP]) 16 January 2023 (2023-01-16) | 1-5,7-21 | INV. H04N23/67 |
| Y | * abstract * <br> * figures 1, 7, 8, 10, 11 * <br> * paragraph [0076] - paragraph [0097] * <br> & EP 4 336 461 A1 (HAMAMATSU PHOTONICS KK [JP]) 13 March 2024 (2024-03-13) <br> ----- | 6 | H04N23/60 G06T7/00 G06V10/82 |
| X | PINKARD HENRY ET AL: "Deep learning for single-shot autofocus microscopy", OPTICA, [Online] vol. 6, no. 6, 20 June 2019 (2019-06-20), pages 794-797, XP093171748, US ISSN: 2334-2536, DOI: 10.1364/OPTICA.6.000794 Retrieved from the Internet: URL:https://www.osapublishing.org/viewmedia.cfm?URI=optica-6-6-794> [retrieved on 2024-06-07] <br> * abstract * <br> * figure 1 * <br> * page 2 * <br> ----- | 1-3,7, 9-15, 18-21 | |
| X | US 2022/383525 A1 (SABATO CERUSO [ES] ET AL) 1 December 2022 (2022-12-01) <br><br> * abstract * <br> * figures 1, 2a, 4a, 4b,5, 6 * <br> * paragraph [0226] - paragraph [0244] * <br> ----- | 1-3,8, 10-15, 18-21 | |
| Y | WO 2021/188839 A1 (OZCAN AYDOGAN [US] ET AL) 23 September 2021 (2021-09-23) | 6 | |
| A | * abstract * <br> * figures 3A, 3B, 4A, 5, 6A * <br> * claims 1-16 * <br> ----- | 1,10,12, 20 | |

**TECHNICAL FIELDS SEARCHED (IPC)**

H04N
G06V

The present search report has been drawn up for all claims

| Place of search | Date of completion of the search | Examiner |
|---|---|---|
| Munich | 13 June 2024 | Elyamany, Noha |

EPO FORM 1503 03.82 (P04C01)

## ANNEX TO THE EUROPEAN SEARCH REPORT
## ON EUROPEAN PATENT APPLICATION NO.

EP 24 15 0316

13-06-2024

| Patent document cited in search report | | Publication date | Patent family member(s) | | Publication date |
|---|---|---|---|---|---|
| JP 7205013 | B1 | 16-01-2023 | CN | 117677988 A | 08-03-2024 |
| | | | EP | 4336461 A1 | 13-03-2024 |
| | | | JP | 7205013 B1 | 16-01-2023 |
| | | | JP | 2023055694 A | 18-04-2023 |
| | | | JP | WO2023002678 A1 | 26-01-2023 |
| | | | KR | 20240034690 A | 14-03-2024 |
| US 2022383525 | A1 | 01-12-2022 | AU | 2022203080 A1 | 08-12-2022 |
| | | | CA | 3157444 A1 | 20-11-2022 |
| | | | CL | 2022001304 A1 | 13-01-2023 |
| | | | CN | 115375532 A | 22-11-2022 |
| | | | EP | 4092572 A1 | 23-11-2022 |
| | | | JP | 7449977 B2 | 14-03-2024 |
| | | | JP | 2022179397 A | 02-12-2022 |
| | | | KR | 20220157329 A | 29-11-2022 |
| | | | TW | 202247100 A | 01-12-2022 |
| | | | US | 2022383525 A1 | 01-12-2022 |
| WO 2021188839 | A1 | 23-09-2021 | US | 2023085827 A1 | 23-03-2023 |
| | | | WO | 2021188839 A1 | 23-09-2021 |

EPO FORM P0459

**REFERENCES CITED IN THE DESCRIPTION**

**Patent documents cited in the description**

- JP 2013050713 A